(19) Europäisches Patentamt
European Patent Office
Office européen des brevets

(11) EP 2 973 116 B1

(12) EUROPEAN PATENT SPECIFICATION

(45) Date of publication and mention of the grant of the patent:
**11.01.2023 Bulletin 2023/02**

(21) Application number: **14764916.4**

(22) Date of filing: **17.03.2014**

(51) International Patent Classification (IPC):
***G06F 9/50*** *(2006.01)* ***G06F 8/61*** *(2018.01)*

(52) Cooperative Patent Classification (CPC):
**G06F 9/5061; G06F 8/61**

(86) International application number:
**PCT/US2014/030599**

(87) International publication number:
**WO 2014/145777 (18.09.2014 Gazette 2014/38)**

# (54) SYSTEMS AND METHODS FOR PROVIDING RANKED DEPLOYMENT OPTIONS

SYSTEME UND VERFAHREN ZUR BEREITSTELLUNG ABGESTUFTER EINSATZOPTIONEN

SYSTÈMES ET PROCÉDÉS POUR FOURNIR DES OPTIONS DE DÉPLOIEMENT HIÉRARCHISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361801199 P**
**15.03.2013 US 201313843512**
**14.03.2014 US 201414213639**

(43) Date of publication of application:
**20.01.2016 Bulletin 2016/03**

(73) Proprietor: **ServiceMesh, Inc.**
**Santa Monica, CA 90401 (US)**

(72) Inventors:
- **CATALANO, John**
  **Santa Monica, California 90401 (US)**
- **FALKENHAGEN, Kyle**
  **Santa Monica, California 90401 (US)**
- **MARTINEZ, Frank**
  **Santa Monica, California 90401 (US)**
- **PULIER, Eric**
  **Santa Monica, California 90401 (US)**
- **WOODALL, Tim**
  **Santa Monica, California 90401 (US)**

(74) Representative: **Gill Jennings & Every LLP**
**The Broadgate Tower**
**20 Primrose Street**
**London EC2A 2ES (GB)**

(56) References cited:
**US-A1- 2006 005 162**
**US-A1- 2008 306 798**
**US-A1- 2011 161 915**
**US-A1- 2011 231 552**
**US-A1- 2012 192 146**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present technology relates to the field of infrastructure environments. More particularly, the present technology relates to techniques for providing ranked deployment options based on data residency criterion. The invention is set out in the appended set of claims.

### BACKGROUND

Application developers can utilize infrastructure environments, such as cloud environments, to deploy applications (or services). In some cases, the applications can comprise complex, multiple-tier workloads. Moreover, application developers may desire to utilize various hybrid cloud environments that include multiple clouds, such as internal private clouds, external hosted clouds, infrastructures-a-service (laaS), platform-as-a-service (PaaS), and/or any combination thereof. For example, the application developers can desire to deploy the complex, multiple-tier workloads into the various hybrid cloud environments. However, under conventional approaches, differences in the applications, workloads, environments, and other factors can create challenges for deployment.

In one example, different applications and different workloads can demand different infrastructure resource requirements. Furthermore, different infrastructure environments and infrastructure resources typically offer different capabilities (e.g., processing capabilities, memory capabilities). As such, under conventional approaches, in order to efficiently utilize a particular infrastructure environment(s) or infrastructure resource(s), it can be necessary for the application developers to manually ensure that their applications and workloads are compatible (or operable) with the particular infrastructure environments and infrastructure resources. In some instances, conventional approaches can require the application developers to modify their applications and workloads in order for the applications and workloads to be suitable for deployment into and usage at the particular infrastructure environments and infrastructure resources. These and other concerns can create challenges for and reduce the overall experience associated with application design and deployment for infrastructure environments.

US 2008/306798 A1 discloses how deployment plans, to service execution environments, of component services associated with a composite service associated with an analysis of data generated by one or more data sources, may be determined. The composite service includes an ordering of execution of the associated component services for the analysis of the data. An evaluation of each of the deployment plans of the component services may be determined based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes. A recommendation including one or more of the deployment plans may be determined based on the evaluation.

### SUMMARY

According to an aspect there is provided a computer-implemented method comprising: receiving a data package associated with an application design plan; receiving information about at least one data residency criterion, the at least one data residency criterion specifying a geographic area where the data package is allowed to reside; determining a set of repositories that are compliant with the at least one data residency criterion, the set of repositories being located in one or more available infrastructure resources; and providing the data package to at least a subset of the set of repositories prior to deploying a deployment plan; receiving (402), by a computing system (300), information about the application design plan (100), the application design plan (100) being associated with at least one deployment criterion; identifying (404), by the computing system (300), the one or more available infrastructure resources based on the information about the application design plan (100); determining (406), by the computing system (300), a plurality of deployment options based on the one or more available infrastructure resources, the plurality of deployment options being determined to be compliant with the at least one deployment criterion; and ranking (408), by the computing system (300), the plurality of deployment options to produce an ordered set of deployment options. The rank of a deployment option, $rank_{option}$, is calculated as:

$$rank_{option} = \sum_{i=0}^{n} w_i \frac{u_i + v_i}{c_i}$$

where: $u_i$ corresponds to a utilization of a resource within the deployment option; $v_i$ corresponds to a requested resource capacity; $c_i$ corresponds to a total capacity of the resource within the deployment option; $w_i$ corresponds to a relative weight assigned to a type of the resource; and n is the number of resources within the deployment option. The method further comprises: generating, by the computing system, a tree data structure having levels of nodes to represent the ordered set of deployment options, wherein each level of nodes in the tree data structure is sorted based on ranking the plurality of deployment options, wherein at least one level of nodes in the tree data structure includes at least one parent

node in a container level associated with logical constructs used in forming the application design plan, the parent node associated with at least one of a web tier, an app tier, and a database tier and having at least one child node in the levels of nodes to represent the ordered set of deployment options; and deploying, by the computing system, the deployment plan comprising the ordered set of deployment options in a cloud computing environment. The application design plan comprises a logical composition of an application, and wherein at least a portion of the at least one deployment criterion is based on: the logical composition of the application; and an availability of the data package at a repository associated with an available infrastructure resource.

According to a further aspect there is provided a system comprising: at least one processor; and a memory storing instructions that, when executed by the at least one processor, cause the system to perform: receiving a data package associated with an application design plan (100); receiving information about at least one data residency criterion, the at least one data residency criterion specifying a geographic area where the data package is allowed to reside; determining a set of repositories that are compliant with the at least one data residency criterion, the set of repositories being located in one or more available infrastructure resources; providing the data package to at least a subset of the set of repositories prior to deploying a deployment plan; and receiving information about the application design plan, the application design plan being associated with at least one deployment criterion; identifying the one or more available infrastructure resources based on the information about the application design plan; determining a plurality of deployment options based on the one or more available infrastructure resources, the plurality of deployment options being determined to be compliant with the at least one deployment criterion; and ranking the plurality of deployment options to produce an ordered set of deployment options. The rank of a deployment option, $rank_{option}$, is calculated as:

$$rank_{option} = \sum_{i=0}^{n} w_i \frac{u_i + v_i}{c_i}$$

where: $u_i$ corresponds to a utilization of a resource within the deployment option; $v_i$ corresponds to a requested resource capacity; $c_i$ corresponds to a total capacity of the resource within the deployment option; $w_i$ corresponds to a relative weight assigned to a type of the resource; and n is the number of resources within the deployment option. The instructions, when executed by the at least one processor, cause the system to further perform: generating a tree data structure having levels of nodes to represent the ordered set of deployment options, wherein each level of nodes in the tree data structure is sorted based on the ranking the plurality of deployment options, wherein the tree data structure includes at least one parent node in a container level associated with logical constructs used in forming the application design plan, the parent node associated with at least one of a web tier, an app tier, and a database tier and having at least one child node in the levels of nodes to represent the ordered set of deployment options; and deploying the deployment plan comprising the ordered set of deployment options in a cloud computing environment. The application design plan comprises a logical composition of an application, and wherein at least a portion of the at least one deployment criterion is based on: the logical composition of the application and an availability of the data package at a repository associated with an available infrastructure resource.

Various examples of the present disclosure includes systems, methods, and non-transitory computer readable media configured to receive information about an application design plan. The application design plan is associated with at least one deployment criterion. One or more available infrastructure resources (e.g., computing resources, network resources, storage resources, etc.) are identified based on the information about the application design plan. A plurality of deployment options is determined based on the one or more available infrastructure resources. The plurality of deployment options is determined to be compliant with the at least one deployment criterion. Moreover, the plurality of deployment options is ranked to produce an ordered set of deployment options. In some instances, some deployment criteria can be specified as hard constraints which must be satisfied, while other deployment criteria can be used to determine best fit but would not necessarily fail the deployment.

In one example, ranking the plurality of deployment options can include evaluating one or more quantitative metrics (e.g., performance, utilization, scalability, cost, latency, etc.) associated with each deployment option in the plurality of deployment options. In some cases, quantitative metrics can include business requirements, constraints, etc.

In one example, the one or more quantitative metrics associated with each deployment option can correspond to one or more computational resource attribute metrics.

In one example, the one or more quantitative metrics associated with each deployment option can comprise at least one of a utilization metric, an available resource capacity metric, a requested resource capacity metric, a service level metric, a weight metric (e.g., a relative weight metric), a geographical metric, or a cost metric.

In one example, a tree data structure is generated to represent the ordered set of deployment options. Each level of nodes in the tree data structure is sorted based on ranking the plurality of deployment options. Each leaf node in the tree data structure can represent a workload associated with the application design plan.

Further, each deployment option in the plurality of deployment options can correspond to a respective component (and/or workflow) associated with the application design plan, and each deployment option corresponding to the respective component can be represented by a path from a respective leaf node to a root node in the tree data structure.

In one example, the application design plan comprises a logical composition of an application, and at least a portion of the at least one deployment criterion is based on the logical composition of the application.

In one example, the logical composition can include at least one of a container defined during application development, a resource affinity specified for the container, a workload, a computational resource attribute descriptive of the workload, a connection associated with the workload, or a package facilitating application installation.

In one example, a computing system configured to rank the plurality of deployment options can be associated with an abstraction layer represented between at least one application and a plurality of infrastructure resources. The plurality of infrastructure resources can include the one or more available infrastructure resources. The abstraction layer facilitates one or more operations between the at least one application and the plurality of infrastructure resources.

In one example, a data package associated with the application design plan is received. Information about at least one data residency criterion is received. A set of repositories that are compliant with the at least one data residency criterion is determined. The set of repositories are associated with the one or more available infrastructure resources. The data package is provided to at least a subset of the set of repositories. The at least one deployment criterion can be dependent, at least in part, upon an availability of the data package at a repository associated with an available infrastructure resource.

In one example, user access to the ordered set of deployment options can be provided. In some cases, at least one of, a highest ordered deployment option in the ordered set or a user-selected deployment option in the plurality of deployment options, can be deployed.

Many other features and examples of the disclosed technology will be apparent from the accompanying drawings and from the following detailed description. The embodiments of the invention are solely defined by the subject-matter of the claims.

## BRIEF DESCRIPTION OF THE DRAWINGS

**FIGURE 1** illustrates an example graphical representation of an application design plan for which ranked deployment options can be provided, according to an example of the present disclosure.

**FIGURE 2** illustrates an example tree data structure configured to represent ranked deployment options, according to an example of the present disclosure.

**FIGURE 3** illustrates an example system configured to store packages operable with ranked deployment options, according to an example of the present disclosure.

**FIGURE 4A** illustrates an example method for providing ranked deployment options, according to an example of the present disclosure.

**FIGURE 4B** illustrates an example method for providing ranked deployment options based on data residency, according to an example of the present disclosure.

**FIGURE 5** shows a diagram illustrating an example system in accordance with an example of the present disclosure.

**FIGURE 6** shows a diagram illustrating an example management module in accordance with an example of the present disclosure.

**FIGURE 7** illustrates an example of a computing device or system that can be used to implement one or more of the examples described herein, according to an example of the present disclosure.

The figures depict various examples of the disclosed technology for purposes of illustration only, wherein the figures use like reference numerals to identify like elements. One skilled in the art will readily recognize from the following discussion that alternative examples of the structures and methods illustrated in the figures can be employed without departing from the principles of the disclosed technology described herein.

## DETAILED DESCRIPTION

### PROVIDING RANKED DEPLOYMENT OPTIONS

Organizations and other entities are increasingly leveraging hybrid cloud environments that span multiple infrastructure environments (e.g., computing environments, network environments, storage environments, etc.). These infrastructure environments can include, for example, internal private clouds, external hosted clouds, infrastructure-as-a-service (IaaS), platform-as-a-service (PaaS), and/or other systems, etc. These infrastructure environments can be different and can be provided by various vendors. However, the ability to deploy complex multi-tier workloads into these heterogeneous multi-vendor environments and/or systems can be costly, inefficient, inconvenient, and/or difficult.

Various examples of the present disclosure can provide a scheduling module, engine, or component (i.e., "meta-scheduler") configured to place workloads across multiple environments to achieve optimal price, performance, and service levels while providing governance and control over security and compliance. The scheduling module can be implemented as software, hardware, or any combination thereof. In some examples, the scheduling module can be implemented as an extension to a cloud (e.g., hybrid cloud environment) management abstraction layer (or module, component, system, platform, etc.). The scheduling module can, for example, be implemented as an extension to a policy and governance model of the cloud management abstraction layer. Furthermore, the cloud management abstraction layer can, for example, correspond to a hybrid cloud management platform or system.

In some implementations, the scheduling module (i.e., meta-scheduler) can correspond to a policy-based scheduling module configured to take into consideration various factors, including deployment policies, when determining and providing deployment options. The scheduling module can also enable de-coupling of an application (or service) design from the underlying infrastructure environment(s) at which the application is to be deployed. Various examples can enable an application design to be produced without requiring the application design to be necessarily tied to a particular environment(s). This can allow for optimized (e.g., best-fit) deployment execution.

Deployment of applications can be optimized at deployment time with respect to various dimensions, such as application constraints, resource constraints, data residency constraints, economic measures, and/or any combination thereof, etc. In some cases, the deployment of applications must comply with the various dimensions, which can be referred to as deployment criteria (e.g., at least one deployment criterion). Further, the applications can be evaluated over time (e.g., continually, continuously, periodically, etc.) for appropriate fit and can be migrated when better or more appropriate execution environments are discovered. These and other advantages can be made possible by the policy-based scheduling module (i.e., meta-scheduler), which is configured to take into account information about applications as well as information about various constraints, criteria, and/or limitations (e.g., business constraints, data residency policies and/or criteria, resource limitations, etc.).

**FIGURE 1** illustrates an example graphical representation 100 of an application design plan for which ranked deployment options can be provided, according to an example of the present disclosure. In the example of **FIGURE 1,** the graphical representation 100 can correspond to an application design plan, or blueprint, for a multi-tier software bundle (e.g., Linux, Apache, MySQL, Perl/PHP/Python (LAMP), etc.). In some examples, a blueprint, such as Blueprint:

LAMP 102, can correspond to a design-time plan that describes the logical composition of a potentially complex multi-tier application (or service). The blueprint can, for example, be created by one or more application (or service) developers. The blueprint can provide the ability for application developers to specify abstract resource requirements without coupling the application design to a specific cloud provider and without significant knowledge of the target environment at which the application is to be deployed. As shown in **FIGURE 1,** the blueprint (e.g., Blueprint: LAMP 102) can, for example, comprise design containers such as Web Tier 110, Application Tier 120, and Database Tier 130.

In some implementations, a container (e.g., design container, design-time container, etc.) can comprise a collection of workloads and/or other containers. Containers can correspond to logical constructs used in forming a blueprint or application design plan. In some cases, a container can be associated with a defined startup ordering. For example, in a scenario with multiple workloads that depend on one another, the startup ordering can describe how a task associated with one workload is to be performed before a task associated with another workload.

Moreover, a container can be associated with a resource affinity. In some examples, affinities can specify that all workloads within a given container must be deployed on the same resource (e.g., same type and/or instance of resource), or conversely, cannot be deployed on the same resource. Examples of a resource can include, but are not limited to, a host, a cluster, a cloud, a network, etc. As such, network affinities can specify that workloads within network-affinity containers must be deployed on a particular network resource(s), whereas host affinities can specify that workloads within host-affinity containers must be deployed at a particular host(s), and so forth.

In some examples, a workload can be associated with a specification of the components to be installed on a virtual machine without necessarily coupling to a specific environment or a specific set of resources. The workload can also be associated with a specification of minimum resource requirements needed for the virtual machine without coupling to specific environments or resources. In some cases, data packaging, configuration management policies, service level agreement (SLA), and/or scaling policies, etc. can be leveraged to define these resource requirements in a stateless fashion. Furthermore, with regard to the resource requirements of workloads, there can be computational resource attributes in the form of tuples configured to describe the computational resource requirements of each workload. In some cases, a tuple can be represented as a multi-dimensional descriptor of attribute name and/or value pairs (e.g., required CPU, memory, network latency, bandwidth, etc.).

With reference now to the Network Affinity: Web Tier container 110, as shown in the example of **FIGURE 1,** the Network Affinity: Web Tier container 110 can comprise a Workload: Load Balancer 112. The Workload: Load Balancer 112 can also include a Nginx component 114. In some implementations, the Nginx component 114 can correspond to a reverse proxy server for various protocols, such as HTTP, HTTPS, SMTP, IMAP, and POP3. In some examples, the Nginx component 114 can perform the functions associated with a load balancer, a cache, and/or a web server, etc. A load balancer can be

an example of a network service. In some cases, a network service can be associated with a logical representation of application requirements in a runtime environment. Other examples of network services can include firewalls, databases as services, and/or other application specific services.

Moreover, as shown in **FIGURE 1,** the Workload: Load Balancer 112 can be connected to the Workload: App 122, which can be included with the Network Affinity: Application Tier 120. In some instances, connections can represent network connection requirements between workloads (e.g., firewall rules, etc.). In some cases, a connection can specify a dependency between workloads such that the downstream end of the connection is blocked until all scripts have run and output variables are available. Scripts (and their attached binaries) can be associated with packages. A package can correspond to, for example, a bundle of scripts and attached binaries that automate the installation of an application (or service).

Continuing with the example of **FIGURE 1,** the Workload: App 122 can utilize Apache 124 and/or PHP 126 to carry out various tasks. The Workload: App 122 can also be connected to the Workload: Database (Active) 134, which can be included with the Host Affinity: Failover Group 132. In some embodiments, the Host Affinity: Failover Group 132 can be associated with the task of switching to a redundant, backup, or standby component (e.g., application, server, system, hardware, network, etc.) upon the failure or abnormal termination of an previously active component. In this example, the Network Affinity: Database Tier 130 can comprise the Host Affinity: Failover Group 132. Furthermore, as shown in **FIGURE 1,** the Host Affinity: Failover Group 132 can also comprise the Workload Database (Backup) 136. Accordingly, the graphical representation 100 illustrates the logical composition for the example Blueprint: LAMP 102 (including various components of the Blueprint: LAMP 102 such has containers, workloads, connections, etc.), which can be designed and created by one or more application developers.

The act of deploying a blueprint can map a logical application design to a set of available resources within a target environment. The blueprint can be analyzed or otherwise processed by the scheduling module (i.e., meta-scheduler) in order to determine and provide deployment options.

In some examples, based on information associated with (e.g., related to, descriptive of, included with, etc.) the blueprint and/or logical design, one or more deployment policies can be acquired (e.g., obtained, received, derived, etc.). The one or more deployment policies can be associated with design-time constraints which constrain the initial set of available cloud resources. Examples of constraints can include (but are not limited to) container resource affinities, workload resource requirements (e.g., minimum CPU and/or memory), application components, availability of required data/artifacts (e.g., packages), operating systems, required Service Level Agreements (SLA), etc. The deployment policies can also be associated with application lifecycle considerations, such as considerations about which Systems Development Life-Cycle (SDLC) stage (e.g., Development, Testing, Staging, Production, etc.) is being represented by a particular and/or present revision of the application. Moreover, the deployment policies can allow for an ability to globally, and/or on a hierarchical basis, define specific sets of cloud resources that can be included or excluded from evaluation for application blueprints deployed within a particular container hierarchy. Furthermore, the deployment policies can allow for the ability to specifically include or exclude sets of resources based on meta-data properties specified via the logical design. In one example, a "geographic" constraint can be enforced by requiring workloads to be tagged with a meta-data property (e.g., geographical, locational, etc.), such that providers or resources that do not match the "geographic" constraint can be filtered out.

Based on the evaluation of deployment policies, the policy-based scheduling module (i.e., meta-scheduler) can generate a set of ordered deployment options (e.g., a ranked deployment plan, a prioritized deployment plan, etc.). A more detailed discussion describing the generation of the ordered (e.g., ranked) set of deployment options is provided below with reference to **FIGURE 2.**

**FIGURE 2** illustrates an example tree data structure 200 configured to represent ranked deployment options, according to an example, of the present disclosure. In the example of **FIGURE 2,** the tree 200 can represent a possible deployment plan including a plurality of possible deployment options determined by the policy-based scheduling module for the Blueprint: LAMP 102 in **FIGURE 1.**

In some examples, the policy-based scheduling module can evaluate one or more deployment policies in order to determine (e.g., identify, select, etc.) the plurality of deployment options for each container and/or workload in the blueprint. The policy-based scheduling module can rank or sort the plurality of deployment options to generate a set of ordered deployment options (i.e., an ordered set of deployment options). To rank or sort the plurality of deployment options, the module can calculate a score or ranking metric for each deployment option, which will be discussed in more detail below.

As discussed above, in some implementations, in order to generate the ordered set of deployment options, the policy-based scheduling module can create a decision tree (e.g., tree 200) to represent the plurality of deployment options determined based on analyzing the blueprint (which, in some cases, can comprise at least one container hierarchy). In one example, the decision tree can be created such that a node in the tree, representative of a container, corresponds to a decision point based on a set of available resources (or resource options) for the container's affinity (e.g. cloud, location, network, etc.). The children of the node can correspond to the available resources or resource options (e.g., possible deployment options that comply with constraints and policies). As shown in the example of **FIGURE 2,** workloads can correspond to leaf nodes in the tree 200. At the leaf-node level, cloud resources (e.g. provider, location, network, hardware model, etc.) can be specified, and cost and resource consumption values can be calculated for that specific set of resources or branch of the tree 200.

In some cases, the policy-based scheduling module can cause cost and resource consumption metrics to be propagated from leaf nodes back up the tree 200. The cost and resource consumption can be calculated for each deployment option by aggregating the cost and resource consumption metrics from each leaf node (e.g., representing a respective workload) up through the tree 200 to the root node. In some cases, each deployment option can correspond to a respective component and/or workflow associated with the blueprint, and each deployment option can be represented by a path from a respective leaf node to a root node.

As discussed previously, in order to rank or sort the plurality of deployment options, the scheduling module can calculate a score or ranking metric for each deployment option. In some examples, the capacity of each deployment option can be expressed as a multi-dimensional descriptor of available resource capacities, wherein for each resource type (r) (e.g., CPU, memory, cost, etc.), both the current utilization (u) and available capacity (c) are indicated in accordance with the expression: $[r_1 = u_1 / c_1, r_2 = u_2 / c_2, ...]$. In some instances, such as for metrics where capacity is not necessarily relevant (e.g., latency), a relative ranking value can be calculated by determining the ratio of the metric value to the maximum value of that metric encountered for any resource provider. For example, capacity can be set to the maximum value of the metric across all providers. Moreover, in some examples, the current utilization (u) and available capacity (c) can be scalar or quantitative values. In some implementations, the expression can be defined based on computational resource attribute metrics.

In addition, an expression can be defined such that given a multidimensional tuple, which describes the resource requirements $[r_1 = v_1, r_2 = v_2, ...]$ of a given workload or set of workloads, can be used to compute the ranking or score for each deployment option. The policy-based scheduling module can compute the ranking (i.e., ranking metric, rank, score, etc.) by calculating, for example, the utilization (or rank) of each resource independently and then combining these into a single scalar ranking or score. In some instances, a set of weighting factors $[r_1 = w_1, r_2 = w_2, ...]$ can also be applied to each of the respective utilizations.

The rank or score for a deployment option is calculated based on the following expression: $Rank_{option} = [(u_1 + v_1) / c_1 * w_1] + [(u_2 + v_2) / c_2 * w_2] + ... + [(u\ n + v_n) / c_n * w_n]$. In this example expression, the variable u corresponds to the utilization of a resource within the deployment option (e.g., 16 cores) and the variable c corresponds to the total capacity of the resource within the deployment option (e.g., 32 cores). The variable v corresponds to a requested resource capacity (e.g., 4 cores) and the variable w corresponds to a relative weight assigned to resource type. Information about the utilization and total capacity of a resource can be acquired from the resource, for example. Information about the requested resource capacity and the relative weight can be acquired from the application design plan and/or from the application developer(s). In some instances, the relative weight can have a default or preset value. In this example, the best (e.g., most preferred) rank or score can correspond to the lowest rank or score.

The ranking metric calculated for each deployment option is used by the scheduling module to sort each level of the tree 200. The nodes in the tree 200 are sorted from best fit to worst fit as defined by the ranking metrics calculated using the above expression and incorporating the relative weights assigned to the resource types. It is also contemplated that each of the resource weights can be adjusted by the end-user to evaluate tradeoffs in optimization for cost versus capacity or other metrics. The sorted (e.g., ranked, ordered) set of deployment options can then be presented to the end user. In the example of **FIGURE 2,** the solid line paths in the tree 200 can represent the best-fit options based on the rank calculated for each of the nodes.

In **FIGURE 2,** the tree 200 can comprise a root node that indicates that the tree 200 is representative of Blueprint LAMP 102 (in **FIGURE 1).** In this example, the root node can have three child nodes, which can be associated with a design container level 202 of the tree 200. The three child nodes can, for example, correspond to Web Tier 110, Application Tier 120, and Database Tier 130 (in **FIGURE 1).** Each of the three nodes can have one or more child nodes, grandchild nodes, and so forth.

For illustrative purposes, the following example is described with respect to the Web Tier node in the design container level 202 of the tree 200 in **FIGURE 2.** Although not discussed in this example, the Application Tier node and the Database Tier node (and their respective branches) can represent similar concepts. In one example, the Web Tier node can have two child nodes (in the upper deployment option level 204 of the tree 200), and each of these two child nodes can have two child nodes of their own (in the lower deployment option level 206). Each of the nodes in the lower deployment option level 206 can have a respective leaf node (in the design workload level 208), which can represent a respective workload (e.g., Load Balancer). The Load Balancer workload can be deployed on each of the deployment options represented by the nodes in the lower deployment option 206. However, the tree 200 can be sorted such that the child nodes of each parent node are ordered from highest rank (e.g., least costly) to lowest rank (e.g., most costly), with the exception of leaf nodes and the root node's children. In this example, the best ranked (e.g., lowest cost, most preferred, etc.) nodes (not including the leaf nodes and the root node's children) are visually represented as being left-most. Accordingly, a solid line path in the tree 200 representing an optimal option is shown to be generally on the left side of a respective tree portion. For example, with respect to the Web Tier container, the Load Balancer workload (represented by a leaf node) can be more optimally deployed on the Azure East option than on the Azure West option, and more optimally deployed using the Azure Public Network option than using the EC2 Public Network option.

Moreover, in some examples, the resulting deployment plan comprising the ordered (e.g., ranked) set of deployment options, as determined by the scheduling module, can be deployed without user interaction. For example, the policy-based scheduling module can deploy the resulting plan using, at least in part, the optimized (e.g., best fit, highest ranked, lowest cost, etc.) paths through the tree 200 at each decision point. This can result in an optimal deployment based on the current design and policy constraints that take into consideration the current capacity, utilization, and performance of the underlying infrastructure. Additionally or alternately, in some examples, users can choose to review the set of available options and modify or adjust the deployment plan to fit their specific requirements by selecting an alternate branch or path. It should be noted that the alternate branch or path still adheres to the design and policy constraints.

In addition to providing ranked deployment options that result in optimized application deployment in compliance with deployment polices, various examples of the present disclosure can also provide packaging constructs useful in distributing, installing, and configuring applications (or services) and their respective data within a cloud and platform agnostic framework. **FIGURE 3** illustrates an example system 300 configured to store packages operable with ranked deployment options, according to an example of the present disclosure.

In some examples, a package can be configured to be compatible or operable with a cloud management abstraction layer 302. The package can, for example, comprise a set of scripts that support the management of a lifecycle of an application (e.g., install, start, stop, reconfigure, etc.) on a target platform. Each of the scripts can include a set of attachments to binaries and/or data required by the application. In some cases, these artifacts can be uploaded directly into the cloud management abstraction layer 302 and/or included via reference to an artifact source of record (e.g. external artifact repository 304, software configuration management (SCM) system 306, internal repository 308, etc.). Various examples can enable the artifacts (e.g., packages, data, etc.) to be pre-staged or uploaded prior to use.

Pre-staging or (pre-)uploading the artifacts into repositories located in each of the cloud environments (e.g., cloud 310, cloud 312, etc.) can limit or reduce contention and utilization of expensive network links, can expedite access to the required artifacts when workloads are deployed into heterogeneous environments, and/or can cause the required artifacts to be securely available outside of firewalls in the case of public cloud environments (e.g., cloud 312). In some examples, the pre-staging of data and/or artifacts into cloud environments prior to their use can be controlled based on a concept of a data residency policy. The data residency policy can work in conjunction with one or more deployment policies to control the prestaging.

In some implementations, data residency policies can be evaluated when artifacts are defined and/or introduced into the cloud management system. The data residency policies can be evaluated to select (or determine) the environments where the associated data is "allowed" to reside. The selected environment should provide the ability to globally, and/or on a hierarchical basis, define specific sets of clouds, locations within clouds, and/or specific repositories that should be included and/or excluded as valid destinations for the pre-staging of application artifacts. Furthermore, in some instances, the selected environment should provide the ability to specifically include and/or exclude destinations based on meta-data properties specified on the packaging assets. In one example, a "geographic" constraint can be enforced by requiring packages and/or scripts to be tagged with a meta-data property. Then the data residency policy can filter out destinations that do not match this geographic constraint.

Based on the result of data residency policy evaluation, the artifacts can be replicated into the allowed environments. Deployment policies can then take into account the availability of the required artifacts when evaluating deployment plans and can filter out environments that do not satisfy the application requirements.

**FIGURE 4A** illustrates an example method 400 for providing ranked deployment options, according to an example of the present disclosure. It should be appreciated that there can be additional, fewer, or alternative steps performed in similar or alternative orders, or in parallel, within the scope of the various examples unless otherwise stated.

At step 402, the example method 400 receives information about an application (or service) design plan (or blueprint). The information about the application design plan is received by the meta-scheduler (i.e., policy-based scheduling module). In some cases, the application design plan is associated with at least one deployment criterion. The at least one deployment criterion can comprise deployment policies (as well as other constraints or limitations) that are to be satisfied for application deployment.

At step 404, the example method 400 identifies one or more available network/infrastructure resources based on the information about the application design plan. In some examples, the one or more available network/infrastructure resources can be identified by the

meta-scheduler.

A plurality of deployment options is determined based on the one or more available network/infrastructure resources, at step 406. In some instances, the plurality of deployment options can be determined by the meta-scheduler. Moreover, the plurality of deployment options is determined to be compliant with the at least one deployment criterion.

Step 408 includes ranking the plurality of deployment options to produce an ordered set of deployment options. In some cases, ranking the plurality of deployment options can be performed by the meta-scheduler. For example, the meta-scheduler can calculate a respective score, rank, or ranking metric, etc., for each of the plurality of deployment options. In some examples, the meta-scheduler can produce the ordered (e.g., ranked, sorted, prioritized, etc.) set of deployment options based on the ranking of the plurality of deployment options. The set of deployment options can be ordered, for example, based on the respective score, rank, or ranking metric calculated for each deployment option.

In some examples, the ordered set of deployment options can be included in a sorted (e.g., ranked, prioritized, ordered, etc.) deployment plan. The sorted deployment plan, including the ordered set of deployment options, is represented in a tree data structure. The ordered set of deployment options (and/or the sorted deployment plan and/or the tree data structure) can be presented to an end user(s). The end user(s) can choose to proceed with application deployment based on the ordered set of deployment options.

**FIGURE 4B** illustrates an example method 450 for providing ranked deployment options based on data residency, according to an example of the present disclosure. Again, it should be appreciated that there can be additional, fewer, or alternative steps performed in similar or alternative orders, or in parallel, within the scope of the various examples unless otherwise stated.

The example method 450 receives a data package associated with an application design plan, at step 452. For example, the data package can include a bundle of scripts and associated binaries. Step 454 includes receiving information about at least one data residency criterion. The at least one data residency criterion can, for example, be associated with at least one data residency policy and/or at least one data residency constraint. At step 456, the method 450 determines a set of repositories that are compliant with the at least one data residency criterion. In some instances, the set of repositories are associated with the one or more available network/infrastructure resources.

Step 458 includes providing the data package to at least a subset of the set of repositories. In some cases, the at least one deployment criterion is dependent, at least in part, upon an availability of the data package at a repository associated with an available network/infrastructure resource.

Various other examples and/or applications are also possible. In one example scenario, one or more examples of the present disclosure can allow for the possibility of demand signals. The set of demand signals can be utilized by qualified application workload hosting providers (e.g., including internal IT) to match available application workload demand with available resource capacity within one or more suitable hosting environments. This can enable a plurality of qualified sell-side hosting providers to competitively bid for available flow of application workloads.

This example scenario can support the digital conveyance of advance signaling, forecasting, sourcing, capacity management, SKU matching, reservation confirmation, delivery validation, support operations, SLA management, and lifecycle event monitoring processes. The example scenario can also support the digital conveyance of KPI analytics, compliance validation reporting, inter-party dispute resolution, and exception handling process communications between any combination of buy-side enterprises, cloud service brokers, cloud service marketplaces, exchanges and other market-making functions, and a plurality of qualified sell-side hosting providers.

Furthermore, this example scenario can also extend to the access of information flows for engaging in the competitive bidding for flow of available application workloads as well as the supporting decision-making processes surrounding the application workload sourcing, fulfillment, and delivery processes of qualified hosting providers.

It is further contemplated that there can be many other uses, applications, and/or variations associated with the various examples of the present disclosure.

## ABSTRACTION LAYER - EXAMPLE IMPLEMENTATION

**FIGURE 5** shows a diagram illustrating an example system 510 in accordance with an example of the present disclosure. **FIGURE 5** illustrates a cloud-computing environment 535 comprising one or more cloud-computing resources, a client network 531 comprising client computing devices 514 (e.g., desktops, laptops, smart mobile devices), and a cloud-computing platform 520 (i.e., cloud management abstraction layer, hybrid cloud management platform) in accordance with an example of the present disclosure. In **FIGURE 5,** cloud-computing platform 520 provides a system through which computing devices 514 residing on client network 531 (e.g., enterprise network) can access one or more cloud-computing services. A cloud-computing service can comprise a cloud-computing resource residing within the cloud-computing environment 535 and managed by the cloud-computing platform 520 to provide the cloud computing service. Depending on the example, cloud-computing environment 535 may comprise one or more cloud providing networks that include cloud-computing resources (e.g., cloud services provided by public or private

clouds, which may be external or internal to the enterprise that uses them) that can be utilized by users. Additionally, depending on the example, platform 520 may reside on the client network 531 or separate from the client network 531.

Cloud-computing environment 535 may comprise an internal cloud, an external cloud, a private cloud, or a public cloud (e.g., commercial cloud). In the example of **FIGURE 5,** cloud-computing environment 535 comprises internal private cloud resource 538, external private cloud resource 541, and secure public cloud resource 544. A private cloud may be implemented using a variety of cloud systems including, for example, Eucalyptus Systems, VMWare vSphere.RTM., or Microsoft.RTM. HyperV. Providers of public clouds may include, for example, Amazon EC2.RTM., Amazon Web Services.RTM., Terremark.RTM., Savvis.RTM., or GoGrid.RTM. Cloud-computing resources provided by these clouds may include, for example, storage resources (e.g., Storage Area Network (SAN), Network File System (NFS), and Amazon S3.RTM.), network resources (e.g., firewall, load-balancer, and proxy server), internal private resources, external private resources, secure public resources, infrastructure-as-a-services (laaSs), platform-as-a-services (PaaSs), or software-as-a-services (SaaSs).

By using cloud-computing platform 520 to plan, build, manage, or use cloud-computing resources within a cloud-computing environment, users of platform 520 can be provided with standardized access to a variety of cloud-computing resources from disparate cloud-computing systems and providers without concerning themselves with the proprietary details of accessing or interfacing with such cloud-computing systems and providers. The platform 520 can be configured to take the workloads that are developed with the platform 520 and automatically provide the interfaces and access steps necessary to operate the workload on any particular platform or infrastructure element within a federation of cloud computing resources, such that the user is able to interact with the platform 520 to develop such workloads at a level of abstraction that allows the user to configure the logic of the workload (including conditional logic that allows interrelation of different workloads) and to embody the technical, operational, and business requirements of the workload in policies that are associated with the workload, without the user being required to access or understand the details of (or in some cases even know about the existence of) such particular platform or infrastructure elements. Additionally, users of platform 520 can access cloud-computing services through platform 520 on-demand and on a self-service basis through the standardized access. Users of cloud computing services offered by platform 520 may include end users, developers, partners, or administrators that reside on the client network 531.

Platform 520 may comprise planner module 523, manager module 526, builder module 529, and consumption module 532. Planner module 523 can be configured to plan cloud-computing service provided by platform 520 by inventorying, profiling, characterizing and prioritizing computer workloads, such as programs, applets, calculations, applications, servers, or services. For example, with respect to software/application development, planner module 523 may model current applications and associated software-development life cycle (SDLC) phases to determine what infrastructure environments would be required or preferred. This may include defining security, privacy, management or other profiles for each SDLC phase of each application. The profiles, in turn, will identify existing infrastructure and systems that support the SDLC phases, and manage relationships between the infrastructure, systems and the applications. Profiles may also contain characteristics regarding the SDLC phases or attributes relevant to development, deployment or performance of infrastructure, systems, or workloads, such as latency, geography, responsiveness, bandwidth, storage capacity, processing speed, processing type, platforms involved (including operating system, file types, communication protocols, and the like), data involved, protocols used, and specific institutional requirements. In terms of prioritizing the cloud-computing services needed for the SDLC phases, planner 523 may first identify which SDLC computing environments and systems would be suitable for cloud computing or migration to cloud computing, and then prioritize the enablement and operability of newly developed or migrated computer workloads according to the SDLC phases. Subsequently, the characterizations determined by planner module 523 can be used by builder module 529 to build a cloud-computing service or to deploy a computer workload to a cloud-computing resource. In the planner module 523 or in other components of the platform 520 associated with the planner module 23 the user may have access to, or may create or modify, policy information relevant to the computer workloads with which the user can interact in the planner module 523. The policy information may be stored in or associated with a meta model, which may enable the identification, characterization, and storage of a wide range of information, including policy information, that can be associated with a given workload. The metamodel data, including policy information, can be associated with the workload such that throughout the various components of the platform 520, from planning through deployment to a cloud, the workflow can be handled in a manner that is consistent with the metamodel data, and in particular consistent with the policies that are applicable to that workload. In the planner module 523 the planner/user may thus plan the use of workloads in a manner that is consistent with technical, operational, and business requirements that are appropriate with such workload, as seen by association of the same with the workload, and the planner/user may modify or populate the policies associated with the workload, such that the metamodel data for that workload embodies and is consistent with the plans of the planner/user. Once associated with the workload, such policies and other metamodel data are stored by the platform 520 and may be used throughout the development and deployment cycle.

Builder module 529 can be configured to assemble, validate, and publish a cloud-computing service or computer workload for consumption (i.e., use) by a user. Builder module 529 may be configured to receive characterization information from planner module 523 and build a cloud-computing service or computer workload based on the information. For example, builder module 529 may be configured to assemble a cloud computing service based on the prioritized list of computer workloads provided by planner module 523. Builder module 529 may be configured to create and edit scripts for loading computer workloads during installation, startup, runtime, and shutdown of cloud-computing services assembled by builder 529. The scripts for the cloud-computing services may be verified and validated before the cloud-computing services are published for consumption (i.e., use). The script may have access to metamodel and policy information which may alter how the script uses the metamodel and policy information to make a decision. Additionally, builder module 529 may be configured to associate the computer workload with the appropriate cloud-computing service or resource (e.g., associate an application with an appropriate underlying virtual machine image or associate a computer workload with a specific network). As with the planner module 523, in the builder module 529 the user/builder may have access to, or may create or modify, policy information relevant to the computer workloads with which the user can interact in the builder module 529, such as the policy information stored in or associated with the above-referenced meta model, which may enable the identification, characterization, and storage of a wide range of information, including policy information, that can be associated with a given workload. In the builder module 529 the builder/user may thus build of workloads in a manner that is consistent with technical, operational, and business requirements that are appropriate with such workload, as seen by association of the same with the workload, and the builder/user may modify or populate the policies associated with the workload, such that the metamodel data for that workload embodies and is consistent with the plans of the planner/user. In examples, the builder module 529 may present options to the builder pre-filtered, such as in pre-populated scripts, filtered drop-down menus, that are dictated by or consistent with the policies and other metamodel data associated with a workload, omitting, blocking or hiding options that are inconsistent with such policies. For example, a workload that stores customer data could omit the option to store a social security number if a data privacy regulation prohibits storing such data in the business process to which the workload relates. Such automatic pre-filtering, pre-configuration, and blocking ensure consistency with the policies associated with the workload at the planning stage (or other stages) while also improving efficiency by removing development paths that might be pursued despite being prohibited. In examples, the metamodel provides a flexible structure to organize metadata and apply the same policies using a combination of system and user supplied metadata that may indicate use of the same policy, however may define the same policy in different ways. For example, in some embodiments, the system may consider a Tier 5 datacenter to be the most fault tolerant type of data center and a user may consider a Tier 1 data center to be the most tolerant. The metamodel allows a policy that requires provisioning in the most fault tolerant data center to be assigned Tier 5 or Tier 1 metadata, depending on the definition of the most fault tolerant data center in that specific operating environment.

Eventually, builder module 529 can publish a cloud-computing service for consumption by users. In some embodiments, the builder module 529 can publish the cloud-computing service to a consumption module 532 (e.g., store or storefront such as an application store, a service store, or a software stack store) where users can preview, select, and subscribe to a cloud-computing service for use. Further, in some examples, the builder module 529 can enter the cloud-computing service in repository 530 when it is ready and available for consumption by users. Examples may also be configured for the builder module 529 such that the development community can approve or disapprove of the cloud-computing service before publication.

Consumption module 532 is configured to allow a user to subscribe to, collaborate on, and assess a cloud-computing service published for consumption. For example, a user can preview cloud-computing services available for deployment to the virtual private cloud and consumption. Then, when a user wants to subscribe and invoke a cloud-computing service for usage, the user can invoke the cloud-computing service on a self-service, on-demand basis through the consumption module 532. Consumption module 532 may list published available cloud-computing service at or near real-time, and allow a user to request updates and information on a listed cloud-computing service. In some embodiments, examples, the consumption module 532 may allow users to collaborate on where, what, and how many cloud-computing services are deployed for consumption. In further examples, consumption module 532 may allow a user to comment on and rate cloud-computing services, or assess the cost associated with deploying and using a cloud-computing service. As noted above, as with the planning module 523 and the builder module 529, the consumption module 532 has access to policy information and other metamodel data that is associated with each workload, such that the workload may be consumed only in a manner that is consistent with such policy information. Thus consumption policies related to permitted time, permitted sets of users, security, pricing, resource consumption rules, and a wide variety of other policies may be maintained by the consumption module based

on the policies associated with the workload in the platform 520.

Manager module 526 can be configured to provision one or more cloud-computing resources for a cloud-computing service or computer workload, manage one or more cloud-computing resources for the cloud-computing service or computer workload, and monitor one or more cloud-computing resources for the cloud-computing service or computer workload. For example, manager module 526 may provision one or more cloud-computing resources (e.g., provision one or more virtual machine instances) for a published cloud-computing service that is invoked from the consumption module 532. Upon invoking the cloud-computing service, the manager module 526 may deploy and start the one or more cloud-computing resources to the virtual private cloud for the cloud-computing service.

With respect to control, manager module 526 may control the start, stop, or run-time of one or more cloud-computing resources (e.g., control start, stop, or run-time of virtual machine instance) for a cloud-computing service. Manager module 526 may further schedule the start and stop time windows for the one or more cloud-computing resources, or govern a service level, such as per a service level agreement (SLA), or a threshold associated with the one or more cloud-computing resources. Through its control, manager module 526 can govern the cloud-computing resource according to conditions, constraints, security policies, or non-security policies. Manager module 526 may also monitor the one or more cloud-computing resources, detect security intrusions, and monitor the consumption of cloud-computing services their associated cloud-computing resources in order to determine the costs accrued by a user. Aspects of cloud-computing resources monitored by manager module 526 include, for example, central processing unit (CPU) usage, memory usage, data storage usage, data input/output usage, application usage, workload usage, service usage, and other attributes of usage of a service or a computer workload.

In some examples, manager module 526 is configured such that a user can request a planner using the planner module 523 to change the design of a cloud-computing service. For example, a user may request that the cloud-computing service change or computer workload with respect to the cloud-computing resources utilized (e.g., change to a platform stack). As in the other components of the platform 520, in the manager module 526 the user may have access to, or may create or modify, policy information or metamodel data relevant to the computer workloads with which the user can interact in the manager module 526. The manager/user of the manager module 526 may thus manage the provisioning of infrastructure and platform elements such that usage will be consistent with the policies of the enterprise, including operational and business policies, as well as technical requirements. For example, provisioning to expensive infrastructure elements may be confined to workloads that satisfy business rules that distinguish between mission critical elements and other elements. The manager/user of the manager module 526 may be provided with access to the policies consistent with the metamodel framework, and in embodiments may be provided with pre-filtered options, such as in menu choices, decision trees, or the like, that are consistent with such policies. For example, a workload designated as non-critical in its metamodel data could automatically appear in the manager module with deployment options confined to relatively low cost clouds, while a mission-critical workload might appear with all different cloud options (or ones that are filtered to satisfy certain requirements as to low latency, bandwidth, storage capacity, guaranteed quality of service, or the like). As with other modules, the manager module 526 may thus enforce policy while streamlining workflow, improving both effectiveness and efficiency.

In some examples, the cloud-computing platform can also comprise a scheduling module 550, as shown in **FIGURE 5.** As discussed previously, the scheduling module 550 can be configured to place workloads across multiple environments to achieve optimal price, performance, and service levels while providing governance and control over security and compliance. In some implementations, the scheduling module 550 can comprise an interface or component configured to receive an application design plan(s). The scheduling module 550 can also comprise an interface or component configured to receive deployment criteria. The deployment criteria can, for example, be associated with one or more deployment policies and/or one or more deployment constraints. Furthermore, the scheduling module 550 can comprise one or more components or modules configured to identify available infrastructure resources and/or configured to determine a plurality of deployment options compliant with deployment criteria. In some instances, the scheduling module 550 can also comprise a ranking module or component configured to rank, sort, or order the plurality of deployment options to produce an ordered set of deployment options. Moreover, the scheduling module 550 can optionally comprise a tree generation module configured to generate a tree data structure representing (a deployment plan corresponding to) the ordered set of deployment options.

As discussed previously, in some cases, the scheduling module 550 can be implemented as software, hardware, or any combination thereof. In some examples, the scheduling module 550 can be implemented as an extension to a cloud (e.g., hybrid cloud environment) management abstraction layer (or module, component, system, platform, etc.), such as the cloud-computing platform 520. The scheduling module can, for example, be implemented as an extension to a policy and governance model of the cloud-computing platform 520. Moreover, in some examples, the scheduling module 550 can be implemented, in part or in whole, in one or more of the various modules included with the cloud-computing platform 520. For example, in some cases, the scheduling

module 550 can be implemented, in part or whole, in the manager module 526.

**FIGURE 6** shows a diagram illustrating an example management module 626 (e.g., management module 526 in **FIGURE 5**) in further detail. As illustrated, management module 626 comprises governor module 603 configured to govern operation of a cloud-computing services and its associated cloud-computing resources, provisioning module 606 configured to provision cloud-computing resources for a cloud-computing service, and monitoring module 612 configured to facilitate the various monitoring functions of management module 626.

In examples, the present disclosure may provide for a policy-driven infrastructure as a service (laaS) event bus, which can be comprised of a policy engine, metamodel, reporting system, and workflow engine; and allows for the creation of business policies, such that said business policies can be reflected into a dynamic information technology environment and expressed across internal and external information technology infrastructure, regardless of operating system, programming language, middleware solution, application platform, or cloud provider, by making use of abstraction layers. The workflow engine provides an integration point between the laaS event bus and workflow management. The abstraction layers allow for integration with application programming interfaces made available by different vendors, business models, technical models, eventing and altering channels and monitoring systems in a vendor agnostic manner. In examples, the abstraction layer could be a cloud-computing provider. A cloud computing provider may be VMWare, Baremetal, Amazon EC2, Savvis, TerreMark, Microsoft HyperV, and the like.

In other examples, there may be multiple layers of abstraction in an abstraction layer.

The policy engine allows policies to be created through an easy to use visual interface that allows users that do not necessarily have information technology skills or other programming skills to author and assign policies to workloads. The policies can be expressed via languages such as XML, and the like. In some examples of the present disclosure a policy could be an event policy. An event policy supports matching one or more events that are temporally related and generate a notification action when matches occur. An event can be defined as either a threshold condition or matching constraints specified as rules. A rule can be comprised of one or more match constraints and each match constraint must be satisfied, by a logical "and" operation, within a specified sliding time window in order for the notification actions to be invoked. A match specifies the set of conditions that must be satisfied to match an event. Each condition specifies a property of an event or object contained by the event, which is matched against a set of one or more values using the supplied comparison operation If multiple values are supplied for a condition then the result is a logical "or" operation of the property being compared and against each value individually. Any of the event properties or properties of objects contained within the event structure may be used to refine the match criteria. For example, an auto-scaling policy may be created to add more web and database servers according to a ration if a business application becomes heavily loaded, in order to reduce the load on that application. In another example, an auto-scaling policy with business awareness may be created that deploys additional business topologies according to an algorithm if revenue per hour exceeds a threshold.

The metamodel allows the system to abstract business user definition from technical definition and allows an enterprise to track information about information technology resources that were unknown when the system was created. By abstracting the business user definition from the technical definition, the metamodel allows business users to define data classes consistent with their enterprise nomenclature, while still being able to map them consistently to the internal system. For example a Tier 4 data center is common technical classification of a data center that generally has the highest uptime, however some enterprises refer to Tier 4 data centers as Tier 1 and the metamodel would allow Tier 1 and Tier 4 to be used interchangeably, depending on the definition used by a specific enterprise. This provides a benefit to the enterprise by eliminating the need to write specific policies for each instance or the need to customize each abstraction layer for individual instances. By tracking information about IT resources that were unknown when the system was created, the metamodel allows business users to arbitrarily define elements of data to track and create policy after the system was built, also allowing the users to track a specific piece of information that is defined for any resources that are managed by the system. Resources could be networks, storage, servers, workloads, topologies, applications, business units, and the like.

In other further examples, the policy-driven infrastructure as a service may also include additional components. Additional components may be reporting, auditing, and federated identify management systems.

In examples, the present disclosure may provide for a visual policy editor, which provides an easy-to-use graphical user interface to a feature-rich and extensible policy engine, using a visual programming language and policies, eliminating the need for the user to write complex code to define, assign, and enforce policies. The graphical user interface allows the user to author policies using a visual drag-and-drop interface or an XML editor. The visual programming language functions could be loops, variables, branching, switching, pulling of attributes, code execution within a policy, and the like. For example the visual programming language could access an external pricing engine that contains live pricing information, then make a decision on the next step of the execution process, based on the information it receives from the pricing engine. In some embodiments, policies can be enforced at an object level. Objects could be organizational groups, individual projects, different deployment environments, and the like. Policies could be access control policies, firewall policies, event-based policies and the like. Access control policies could include packages, scripts, and the like. Access control policies could be defined by cloud or other service providers, network attributes, network geographic location, security policies, and the like. Firewall policies may include port and network ACL lists that are applied as policies and applied at container level to ensure conformance to corporate standards for port opening/closing. Event based policies relate to service level management and could include compound threshold rules that trigger an action, lifecycle event management, compound event sequences, signature detection, and policy stacking, and the like. For example, a policy could be defined to restrict deployment of a computing workload to private internal clouds in a specific country.

In examples, the present disclosure may provide for automated processes to support a continuous integration cycle to migrate a computing workload from a development environment to an operational environment. The continuous integration cycle may include maintaining a code repository, automating the build process, self-testing the build process, automatically deploying the build, and the like. The policies and metamodels defined and assigned to the computing workload environment follow the build from its creation using the Builder Module through to its publication into the Consumption module. This capability allows the enterprise to greatly reduce the time required to develop, test, deploy and update a computing workload. Continuous integration may also include ensuring the modernization, patch management, conforming configuration of deployed cloud-computing services. The examples may provide this service as DevToOps policy allowing centrally defined service definition that deployed cloud-compute services can compare against and either update themselves when their configuration no longer matches, warn administrators of non-conformance, rewrite themselves back to conformance when configurations of the cloud-compute services are made arbitrarily, and the like.

As noted before, various examples of the present disclosure provide standardized access, management, or control to different types of cloud-computing resources on a self-service, on-demand basis without the user needing to know the specific instructions or details for accessing, managing, or controlling those different target cloud-computing resources.

In some implementations, in order to translate a standard management action for a cloud-computing service to instructions for its cloud-computing resource and/or instructions for a computer workload to be executed on a cloud-computing resource, some management modules may comprise a cloud model data store 609 that maps the management action to the appropriate cloud-computing resources. Subsequently, the management action can be translated to one or more instructions for a target cloud-computing resource and/or a computer workload operating thereon. For example, a topology is an example of a cloud service, where a topology can be comprised of a number of individual virtual machines orchestrated together. A common management action to perform on a topology is to start it. This simple topology start action within the management layer gets turned into a number of individual instructions that get passed down into the cloud service bus 615, such as (1) calculate the Start Up order for topology, (2) initiate ordered startup one VM at a time, (3) as VM's come up, attach volumes that are associated with the VM, (4) install any packages and software onto the VM's, and (5) once all machines are up and running the topology status changes to running.

Cloud service bus 615 may be utilized to parse management instructions received from the manager module 626, transform the management instructions to instructions compatible with the target cloud-computing resource, and route the management instruction to the targeted cloud-computing resource. In some examples, the cloud service bus 615 can then route, via a connection module(s) 618, the instructions to the application program interface (API) 621 for a target cloud-computing resource from an external commercial cloud resource(s) 627, or to the virtual machine manager (VMM) (e.g., hypervisor) 624 for a target cloud-computing resource from an internal private cloud resource(s) 630.

## HARDWARE IMPLEMENTATION

The foregoing processes and features can be implemented by a wide variety of machine and computer system architectures and in a wide variety of network and computing environments. **FIGURE 7** illustrates an example of a computer system 700 that may be used to implement one or more of the examples described herein in accordance with an example of the invention. The computer system 700 includes sets of instructions for causing the computer system 700 to perform the processes and features discussed herein. The computer system 700 may be connected (e.g., networked) to other machines. In a networked deployment, the computer system 700 may operate in the capacity of a server machine or a client machine in a client-server network environment, or as a peer machine in a peer-to-peer (or distributed) network environment. In an example of the invention, the computer system 700 may be a component of the networking system described herein. In an example of the present disclosure, the computer system 700 may be one server among many that constitutes all or part of a networking system.

The computer system 700 can include a processor 702, a cache 704, and one or more executable modules and drivers, stored on a computer-readable medium, directed to the processes and features described herein. Additionally, the computer system 700 may include a high performance input/output (I/O) bus 706 or

a standard I/O bus 708. A host bridge 710 couples processor 702 to high performance I/O bus 706, whereas I/O bus bridge 712 couples the two buses 706 and 708 to each other. A system memory 714 and one or more network interfaces 716 couple to high performance I/O bus 706. The computer system 700 may further include video memory and a display device coupled to the video memory (not shown). Mass storage 718 and I/O ports 720 couple to the standard I/O bus 708. The computer system 700 may optionally include a keyboard and pointing device, a display device, or other input/output devices (not shown) coupled to the standard I/O bus 708. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 700, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, Calif., UNIX operating systems, Microsoft® Windows® operating systems, BSD operating systems, and the like. Other implementations are possible.

The elements of the computer system 700 are described in greater detail below. In particular, the network interface 716 provides communication between the computer system 700 and any of a wide range of networks, such as an Ethernet (e.g., IEEE 802.3) network, a backplane, etc. The mass storage 718 provides permanent storage for the data and programming instructions to perform the above-described processes and features implemented by the respective computing systems identified above, whereas the system memory 714 (e.g., DRAM) provides temporary storage for the data and programming instructions when executed by the processor 702. The I/O ports 720 may be one or more serial and/or parallel communication ports that provide communication between additional peripheral devices, which may be coupled to the computer system 700.

The computer system 700 may include a variety of system architectures, and various components of the computer system 700 may be rearranged. For example, the cache 704 may be on-chip with processor 702. Alternatively, the cache 704 and the processor 702 may be packed together as a "processor module", with processor 702 being referred to as the "processor core". Furthermore, certain embodiments of the invention may neither require nor include all of the above components. For example, peripheral devices coupled to the standard I/O bus 708 may couple to the high performance I/O bus 706. In addition, in some embodiments, only a single bus may exist, with the components of the computer system 700 being coupled to the single bus. Furthermore, the computer system 700 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 700 that, when read and executed by one or more processors, cause the computer system 700 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 700, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 702. Initially, the series of instructions may be stored on a storage device, such as the mass storage 718. However, the series of instructions can be stored on any suitable computer readable storage medium. Furthermore, the series of instructions need not be stored locally, and could be received from a remote storage device, such as a server on a network, via the network interface 716. The instructions are copied from the storage device, such as the mass storage 718, into the system memory 714 and then accessed and executed by the processor 702. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 700 to perform any one or more of the processes and features described herein.

For purposes of explanation, numerous specific details are set forth in order to provide a thorough understanding of the description. It will be apparent, however, to one skilled in the art that examples of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Similarly, various features are described that may be preferences or requirements for some examples, but not other examples.

It should also be appreciated that the specification and drawings are to be regarded in an illustrative sense. It can be evident that various changes, alterations, and modifications can be made thereunto without departing from the scope of the disclosed technology.

Moreover, the language used herein has been principally selected for readability and instructional purposes, and it may not have been selected to delineate or circumscribe the inventive subject matter. It is therefore intended that the scope of the invention be limited not by this detailed description, but rather by the claims. Accordingly, the disclosure of the examples of the invention is intended to be illustrative, but not limiting, of the scope of the invention, which is set forth in the following claims.

## Claims

**1.** A computer-implemented method comprising:

receiving a data package associated with an application design plan (100);
receiving information about at least one data residency criterion, the at least one data residency criterion specifying a geographic area where the data package is allowed to reside;
determining a set of repositories that are compliant with the at least one data residency criterion, the set of repositories being located in one or more available infrastructure resources;
providing the data package to at least a subset of the set of repositories prior to deploying a deployment plan;
receiving (402), by a computing system (300), information about the application design plan (100), the application design plan (100) being associated with at least one deployment criterion;
identifying (404), by the computing system (300), the one or more available infrastructure resources based on the information about the application design plan (100);
determining (406), by the computing system (300), a plurality of deployment options based on the one or more available infrastructure resources, the plurality of deployment options being determined to be compliant with the at least one deployment criterion;
ranking (408), by the computing system (300), the plurality of deployment options to produce an ordered set of deployment options, wherein the rank of a deployment option, $rank_{option}$, is calculated as

$$rank_{option} = \sum_{i=1}^{n} (\mathrm{w}_i) \frac{u_i + v_i}{c_i}$$

where

$u_i$ corresponds to a utilization of a resource within the deployment option;
$\mathrm{v}_\mathrm{i}$ corresponds to a requested resource capacity;
$\mathrm{c}_\mathrm{i}$ corresponds to a total capacity of the resource within the deployment option;
$\mathrm{w}_\mathrm{i}$ corresponds to a relative weight assigned to a type of the resource; and
$n$ is the number of resources within the deployment option;

generating, by the computing system (300), a tree data structure (200) having levels (204, 206, 208) of nodes to represent the ordered set of deployment options, wherein each level of nodes in the tree data structure (200) is sorted based on ranking the plurality of deployment options, wherein at least one level of nodes in the tree data structure (200) includes at least one parent node in a container level (202) associated with logical constructs used in forming the application design plan (100), the parent node associated with at least one of a web tier, an app tier, and a database tier and having at least one

child node in the levels (204, 206, 208) of nodes to represent the ordered set of deployment options; and
deploying, by the computing system (300), the deployment plan comprising the ordered set of deployment options in a cloud computing environment;
wherein the application design plan (100) comprises a logical composition of an application, and wherein at least a portion of the at least one deployment criterion is based on:

the logical composition of the application; and
an availability of the data package at a repository associated with an available infrastructure resource.

**2.** The computer-implemented method of claim 1, wherein each leaf node in the tree data structure (200) represents a workload associated with the application design plan (100), and wherein each deployment option in the plurality of deployment options corresponds to a respective component associated with the application design plan (100), and wherein each deployment option corresponding to the respective component is represented by a path from a respective leaf node to a root node in the tree data structure (200) .

**3.** The computer-implemented method of claim 1, wherein the logical composition includes at least one of a container defined during application development, a resource affinity specified for the container, a workload, a computational resource attribute descriptive of the workload, a connection associated with the workload, or a package facilitating application installation.

**4.** The computer-implemented method of claim 1, wherein the computing system (300) is associated with an abstraction layer represented between at least one application and a plurality of infrastructure resources, wherein the plurality of infrastructure resources includes the one or more available infrastructure resources, and wherein the abstraction layer facilitates one or more operations between the at least one application and the plurality of infrastructure resources.

**5.** The computer-implemented method of claim 1, further comprising:

providing user access to the ordered set of deployment options; and
deploying at least one of a highest ordered deployment option in the ordered set or a user-selected deployment option in the plurality of deployment options.

**6.** A system comprising:

at least one processor; and
a memory storing instructions that, when executed by the at least one processor, cause the system to perform:

receiving a data package associated with an application design plan (100);
receiving information about at least one data residency criterion, the at least one data residency criterion specifying a geographic area where the data package is allowed to reside;
determining a set of repositories that are compliant with the at least one data residency criterion, the set of repositories being located in one or more available infrastructure resources;
providing the data package to at least a subset of the set of repositories prior to deploying a deployment plan;
receiving information about the application design plan (100), the application design plan (100) being associated with at least one deployment criterion;
identifying the one or more available infrastructure resources based on the information about the application design plan (100);
determining a plurality of deployment options based on the one or more available infrastructure resources, the plurality of deployment options being determined to be compliant with the at least one deployment criterion;
ranking the plurality of deployment options to produce an ordered set of deployment options wherein the rank of a deployment option, $rank_{option}$, is calculated as

$$rank_{option} = \sum_{i=1}^{n} (w_i) \frac{u_i + v_i}{c_i}$$

where

$u_i$ corresponds to a utilization of a resource within the deployment option;
$v_i$ corresponds to a requested resource capacity;
$c_i$ corresponds to a total capacity of the resource within the deployment option;
$w_i$ corresponds to a relative weight assigned to a type of the resource; and

*n* is the number of resources within the deployment option;

generating a tree data structure (200) having levels (204, 206, 208) of nodes to represent the ordered set of deployment options, wherein each level of nodes in the tree data structure (200) is sorted based on the ranking the plurality of deployment options, wherein the tree data structure (200) includes at least one parent node in a container level (202) associated with logical constructs used in forming the application design plan (100), the parent node associated with at least one of a web tier, an app tier, and a database tier and having at least one child node in the levels (204, 206, 208) of nodes to represent the ordered set of deployment options; and

deploying the deployment plan comprising the ordered set of deployment options in a cloud computing environment;

wherein the application design plan (100) comprises a logical composition of an application, and wherein at least a portion of the at least one deployment criterion is based on:

the logical composition of the application; and

an availability of the data package at a repository associated with an available infrastructure resource.

**7.** The system of claim 6, wherein each leaf node in the tree data structure (200) represents a workload associated with the application design plan (100), and wherein each deployment option in the plurality of deployment options corresponds to a respective component associated with the application design plan (100), and wherein each deployment option corresponding to the respective component is represented by a path from a respective leaf node to a root node in the tree data structure (200).

**8.** The system of claim 6, wherein the system is associated with an abstraction layer represented between at least one application and a plurality of infrastructure resources, wherein the plurality of infrastructure resources includes the one or more available infrastructure resources, and wherein the abstraction layer facilitates one or more operations between the at least one application and the plurality of infrastructure resources.

**9.** A non-transitory computer-readable storage medium including instructions that, when executed by at least one processor of a computing system (300), cause the computing system (300) to perform the method of any one of claims 1, 2 or 4.

## Patentansprüche

**1.** Computerimplementiertes Verfahren, das Folgendes umfasst:

Empfangen eines Datenpakets, das mit einem Anwendungsentwurfsplan (100) verbunden ist;

Empfangen von Informationen über mindestens ein Datenresidenzkriterium, wobei das mindestens eine Datenresidenzkriterium einen geographischen Bereich spezifiziert, in dem sich das Datenpaket aufhalten darf;

Bestimmen eines Satzes von Repositories, die mit dem mindestens einen Datenresidenzkriterium übereinstimmen, wobei sich der Satz von Repositories in einer oder mehreren verfügbaren Infrastrukturressourcen befindet;

Bereitstellen des Datenpakets für mindestens eine Teilmenge der Menge von Repositories vor der Bereitstellung eines Bereitstellungsplans;

Empfangen (402), durch ein Computersystem (300), von Informationen über den Anwendungsentwurfsplan (100), wobei der Anwendungsentwurfsplan (100) mit mindestens einem Bereitstellungskriterium verbunden ist;

Identifizieren (404), durch das Computersystem (300), der einen oder mehreren verfügbaren Infrastrukturressourcen basierend auf den Informationen über den Anwendungsentwurfsplan (100);

Bestimmen (406), durch das Computersystem (300), einer Vielzahl von Bereitstellungsoptionen basierend auf der einen oder den mehreren verfügbaren Infrastrukturressourcen, wobei die Vielzahl von Bereitstellungsoptionen so bestimmt wird, dass sie mit dem mindestens einen Bereitstellungskriterium übereinstimmen;

Ordnen (408), durch das Computersystem (300), der Vielzahl von Bereitstellungsoptionen, um einen geordneten Satz von Bereitstellungsoptionen zu erzeugen, wobei der Rang einer Bereitstellungsoption, $rank_{option}$, berechnet wird als

$$rank_{option} = \sum_{i=1}^{n} (w_i) \frac{u_i + v_i}{c_i}$$

wobei

$u_i$ einer Auslastung einer Ressource innerhalb der Bereitstellungsoption entspricht;
$v_i$ einer angeforderten Ressourcenkapazität entspricht;
$c_i$ einer Gesamtkapazität der Ressource innerhalb der Bereitstellungsoption entspricht; und
$w_i$ einer relativen Gewichtung entspricht, die einem Typ der Ressource zugeordnet ist;
$n$ die Anzahl der Ressourcen innerhalb der Bereitstellungsoption ist;
Erzeugen, durch das Computersystem (300), einer Baumdatenstruktur (200) mit Ebenen (204, 206, 208) von Knoten, um den geordneten Satz von Bereitstellungsoptionen darzustellen, wobei jede Ebene von Knoten in der Baumdatenstruktur (200) basierend auf der Rangfolge der Vielzahl von Bereitstellungsoptionen sortiert ist, wobei mindestens eine Ebene von Knoten in der Baumdatenstruktur (200) mindestens einen übergeordneten Knoten in einer Containerebene (202) umfasst, die mit logischen Konstrukten verbunden ist, die bei der Bildung des Anwendungsentwurfsplans (100) verwendet werden, wobei der übergeordnete Knoten mit mindestens einer von einer Web-Ebene, einer Anwendungs-Ebene und einer Datenbank-Ebene verknüpft ist und mindestens einen untergeordneten Knoten in den Ebenen (204, 206, 208) von Knoten aufweist, um den geordneten Satz von Bereitstellungsoptionen darzustellen; und
Bereitstellen, durch das Computersystem (300), des Bereitstellungsplans, der den geordneten Satz von Bereitstellungsoptionen umfasst, in einer Cloud-Computing-Umgebung;
wobei der Anwendungsentwurfsplan (100) eine logische Zusammensetzung einer Anwendung umfasst, und wobei mindestens ein Teil des mindestens einen Bereitstellungskriteriums auf Folgendem basiert:

der logischen Zusammensetzung der Anwendung; und
einer Verfügbarkeit des Datenpakets in einem Repository, das mit einer verfügbaren Infrastrukturressource verbunden ist.

**2.** Computerimplementiertes Verfahren nach Anspruch 1, wobei jeder Blattknoten in der Baumdatenstruktur (200) eine mit dem Anwendungsentwurfsplan (100) verbundene Arbeitslast darstellt, und wobei jede Bereitstellungsoption in der Vielzahl von Bereitstellungsoptionen einer jeweiligen Komponente entspricht, die mit dem Anwendungsentwurfsplan (100) verbunden ist, und wobei jede Bereitstellungsoption, die der jeweiligen Komponente entspricht, durch einen Pfad von einem jeweiligen Blattknoten zu einem Wurzelknoten in der Baumdatenstruktur (200) dargestellt wird.

**3.** Computerimplementiertes Verfahren nach Anspruch 1, wobei die logische Zusammensetzung Folgendes umfasst: mindestens eines von einem während der Anwendungsentwicklung definierten Container, einer für den Container spezifizierten Ressourcenaffinität, einem Workload, einem den Workload beschreibenden Rechenressourcenattribut, einer mit dem Workload verbundenen Verbindung oder einem die Anwendungsinstallation ermöglichenden Paket.

**4.** Computerimplementiertes Verfahren nach Anspruch 1, wobei das Computersystem (300) mit einer Abstraktionsschicht verbunden ist, die zwischen mindestens einer Anwendung und einer Vielzahl von Infrastrukturressourcen dargestellt wird, wobei die Vielzahl von Infrastrukturressourcen die eine oder mehrere verfügbare Infrastrukturressourcen umfasst, und wobei die Abstraktionsschicht eine oder mehrere Operationen zwischen der mindestens einen Anwendung und der Vielzahl von Infrastrukturressourcen ermöglicht.

**5.** Computerimplementiertes Verfahren nach Anspruch 1, das ferner Folgendes umfasst:

Bereitstellen eines Benutzerzugriffs auf den geordneten Satz von Bereitstellungsoptionen; und
Bereitstellen mindestens einer der höchsten geordneten Bereitstellungsoptionen in der geordneten Menge oder einer vom Benutzer ausgewählten Bereitstellungsoption in der Vielzahl von Bereitstellungsoptionen.

**6.** System, das Folgendes umfasst:

mindestens einen Prozessor; und
einen Speicher, der Anweisungen speichert, die, wenn sie von dem mindestens einen Prozessor ausgeführt werden, das System veranlassen, Folgendes auszuführen:

Empfangen eines Datenpakets, das mit einem Anwendungsentwurfsplan (100) verbunden ist;
Empfangen von Informationen über mindestens ein Datenresidenzkriterium, wobei das mindestens eine Datenresidenzkriterium einen geographischen Bereich spezifiziert, in dem sich das Datenpaket aufhalten darf;
Bestimmen eines Satzes von Repositories, die mit dem mindestens einen Datenresidenzkriterium übereinstimmen, wobei sich der Satz von Repositories in einer oder mehreren verfügbaren Infrastrukturressourcen befindet;
Bereitstellen des Datenpakets für mindestens eine Teilmenge der Menge von Repositories vor der Bereitstellung eines Bereitstellungsplans;
Empfangen von Informationen über den Anwendungsentwurfsplan (100), wobei der Anwendungsentwurfsplan (100) mit mindestens einem Bereitstellungskriterium verbunden ist;
Identifizieren der einen oder mehreren verfügbaren Infrastrukturressourcen basierend auf den Informationen über den Anwendungsentwurfsplan (100);
Bestimmen einer Vielzahl von Bereitstellungsoptionen basierend auf der einen oder den mehreren verfügbaren Infrastrukturressourcen, wobei die Vielzahl von Bereitstellungsoptionen so bestimmt wird, dass sie mit dem mindestens einen Bereitstellungskriterium übereinstimmen;
Ordnen der Vielzahl von Bereitstellungsoptionen, um einen geordneten Satz von Bereitstellungsoptionen zu erzeugen, wobei der Rang einer Bereitstellungsoption, $rank_{option}$, berechnet wird als

$$rank_{option} = \sum_{i=1}^{n} (w_i) \frac{u_i + v_i}{c_i}$$

wobei

$u_i$ einer Auslastung einer Ressource innerhalb der Bereitstellungsoption entspricht;
$v_i$ einer angeforderten Ressourcenkapazität entspricht;
$c_i$ einer Gesamtkapazität der Ressource innerhalb der Bereitstellungsoption entspricht;
$w_i$ einer relativen Gewichtung entspricht, die einem Typ der Ressource zugeordnet ist; und
$n$ die Anzahl der Ressourcen innerhalb der Bereitstellungsoption ist;
Erzeugen einer Baumdatenstruktur (200) mit Ebenen (204, 206, 208) von Knoten, um den geordneten Satz von Bereitstellungsoptionen darzustellen, wobei jede Ebene von Knoten in der Baumdatenstruktur (200) basierend auf der Rangfolge der Vielzahl von Bereitstellungsoptionen sortiert ist, wobei die Baumdatenstruktur (200) mindestens einen übergeordneten Knoten in einer Containerebene (202) umfasst, die mit logischen Konstrukten verbunden ist, die bei der Bildung des Anwendungsentwurfsplans (100) verwendet werden, wobei der übergeordnete Knoten mit mindestens einer von einer Web-Ebene, einer Anwendungs-Ebene und einer Datenbank-Ebene verknüpft ist und mindestens einen untergeordneten Knoten in den Ebenen (204, 206, 208) von Knoten aufweist, um den geordneten Satz von Bereitstellungsoptionen darzustellen; und
Bereitstellen des Bereitstellungsplans, der den geordneten Satz von Bereitstellungsoptionen umfasst, in einer Cloud-Computing-Umgebung;
wobei der Anwendungsentwurfsplan (100) eine logische Zusammensetzung einer Anwendung umfasst, und wobei mindestens ein Teil des mindestens einen Bereitstellungskriteriums auf Folgendem basiert:

der logischen Zusammensetzung der Anwendung; und
einer Verfügbarkeit des Datenpakets in einem Repository, das mit einer verfügbaren Infrastrukturressource verbunden ist.

**7.** System nach Anspruch 6,
wobei jeder Blattknoten in der Baumdatenstruktur (200) eine mit dem Anwendungsentwurfsplan (100) verbundene Arbeitslast darstellt, und wobei jede Bereitstellungsoption in der Vielzahl von Bereitstellungsoptionen einer jeweiligen Komponente entspricht, die mit dem Anwendungsentwurfsplan (100) verbunden ist, und wobei jede Bereitstellungsoption, die der jeweiligen Komponente entspricht, durch einen Pfad von einem jeweiligen Blattknoten zu einem Wurzelknoten in der Baumdatenstruktur (200) dargestellt wird.

**8.** System nach Anspruch 6,
wobei das System mit einer Abstraktionsschicht verbunden ist, die zwischen mindestens einer Anwendung und einer Vielzahl von Infrastrukturressourcen dargestellt wird, wobei die Vielzahl von Infrastrukturressourcen die eine oder mehrere verfügbare Infrastrukturressourcen umfasst, und wobei die Abstraktionsschicht eine oder mehrere Operationen zwischen der mindestens einen Anwendung und der Vielzahl von Infrastrukturressourcen ermöglicht.

**9.** Nicht-flüchtiges computerlesbares Speichermedium, das Anweisungen umfasst, die, wenn sie von mindestens einem Prozessor eines Computersystems (300) ausgeführt werden, das Computersystem (300) veranlassen, das Verfahren nach einem der Ansprüche 1, 2 oder 4 auszuführen.

## Revendications

**1.** Procédé mis en œuvre par ordinateur comportant les étapes consistant à :

recevoir un paquet de données associé à un plan de conception d'application (100) ;
recevoir des informations se rapportant à au moins un critère de résidence de données, ledit au moins un critère de résidence de données spécifiant une zone géographique où le paquet de données est autorisé à résider ;
déterminer un ensemble de dépôts qui sont conformes audit au moins un critère de résidence de données, l'ensemble de dépôts étant situé dans une ou plusieurs ressources d'infrastructures disponibles ;
fournir le paquet de données à au moins un sous-ensemble de l'ensemble de dépôts avant de déployer un plan de déploiement ;
recevoir (402), par un système informatique (300), des informations se rapportant au plan de conception d'application (100), le plan de conception d'application (100) étant associé à au moins un critère de déploiement ;
identifier (404), par le système informatique (300), lesdites une ou plusieurs ressources d'infrastructures disponibles en se basant sur les informations se rapportant au plan de conception d'application (100) ;
déterminer (406), par le système informatique (300), une pluralité d'options de déploiement en se basant sur lesdites une ou plusieurs ressources d'infrastructures disponibles, la pluralité d'options de déploiement étant déterminée pour être conforme audit au moins un critère de déploiement ;
hiérarchiser (408), par le système informatique (300), la pluralité d'options de déploiement pour produire un ensemble ordonné d'options de déploiement, dans lequel la hiérarchie d'une option de déploiement, *rank*$_{option}$, est calculée comme étant

$$rank_{option} = \sum_{i=1}^{n} (w_i) \frac{u_i + v_i}{c_i}$$

où

$u_i$ correspond à une utilisation d'une ressource à l'intérieur de l'option de déploiement ;
$v_i$ correspond à une capacité de ressource demandée ;
$c_i$ correspond à une capacité totale de la ressource à l'intérieur de l'option de déploiement ;
$w_i$ correspond à un poids relatif affecté à un type de la ressource ; et
n est le nombre de ressources à l'intérieur de l'option de déploiement ;

générer, par le système informatique (300), une structure arborescente de données (200) ayant des niveaux (204, 206, 208) de nœuds pour représenter l'ensemble ordonné d'options de déploiement, dans lequel chaque niveau de nœuds dans la structure arborescente de données (200) est trié en se basant sur une hiérarchisation de la pluralité d'options de déploiement, dans lequel au moins un niveau de nœuds dans la structure arborescente de données (200) comprend au moins un nœud parent dans un niveau de conteneur (202) associé à des éléments logiques utilisés pour former le plan de conception d'application (100), le nœud parent étant associé à au moins l'un parmi un palier Web, un palier app, et un palier base de données et ayant au moins un nœud enfant dans les niveaux (204, 206, 208) de nœuds pour représenter l'ensemble ordonné d'options de déploiement ; et
déployer, par le système informatique (300), le plan de déploiement comportant l'ensemble ordonné d'options de déploiement dans un environnement d'informatique en nuage ;
dans lequel le plan de conception d'application (100) comporte une composition logique d'une application, et dans lequel au moins une partie dudit au moins un critère de déploiement est basée sur :

la composition logique de l'application ; et
une disponibilité du paquet de données au niveau d'un dépôt associé à une ressource d'infrastructure disponible.

**2.** Procédé mis en œuvre par ordinateur selon la revendication 1, dans lequel chaque nœud feuille dans la structure arborescente de données (200) représente une charge de travail associée au plan de conception d'application (100), et dans lequel chaque option de déploiement dans la pluralité d'options de déploiement correspond à un composant respectif associé au plan de conception d'application (100), et dans lequel chaque option de déploiement correspondant au composant respectif est représentée par un chemin allant d'un nœud feuille respectif à un nœud racine dans la structure arborescente de données (200).

**3.** Procédé mis en œuvre par ordinateur selon la revendication 1, dans lequel la composition logique comprend au moins l'un parmi un conteneur défini au cours du développement de l'application, une affinité de ressources spécifiée pour le conteneur, une charge de travail, un attribut de ressource de calcul décrivant la charge de travail, une connexion associée à la charge de travail, ou un paquet facilitant l'installation de l'application.

**4.** Procédé mis en œuvre par ordinateur selon la revendication 1, dans lequel le système informatique (300) est associé à une couche d'abstraction représentée entre au moins une application et une pluralité de ressources d'infrastructures, dans lequel la pluralité de ressources d'infrastructures comprend lesdites une ou plusieurs ressources d'infrastructures disponibles, et dans lequel la couche d'abstraction facilite une ou plusieurs opérations entre ladite au moins une application et la pluralité de ressources d'infrastructures.

**5.** Procédé mis en œuvre par ordinateur selon la revendication 1, comportant par ailleurs les étapes consistant à :

fournir un accès utilisateur à l'ensemble ordonné d'options de déploiement ; et
déployer au moins l'une parmi une option de déploiement d'ordre le plus haut dans l'ensemble ordonné ou une option de déploiement sélectionnée par un utilisateur dans la pluralité d'options de déploiement.

**6.** Système comportant :

au moins un processeur ; et
une mémoire stockant des instructions qui, quand elles sont exécutées par ledit au moins un processeur, amènent le système à effectuer les étapes consistant à :

recevoir un paquet de données associé à un plan de conception d'application (100) ;
recevoir des informations se rapportant à au moins un critère de résidence de données, ledit au moins un critère de résidence de données spécifiant une zone géographique où le paquet de données est autorisé à résider ;
déterminer un ensemble de dépôts qui sont conformes audit au moins un critère de résidence de données, l'ensemble de dépôts étant situé dans une ou plusieurs ressources d'infrastructures disponibles ;
fournir le paquet de données à au moins un sousensemble de l'ensemble de dépôts avant de déployer un plan de déploiement ;
recevoir des informations se rapportant au plan de conception d'application (100), le plan de conception d'application (100) étant associé à au moins un critère de déploiement ;
identifier lesdites une ou plusieurs ressources d'infrastructures disponibles en se basant sur les informations se rapportant au plan de conception d'application (100) ;
déterminer une pluralité d'options de déploiement en se basant sur lesdites une ou plusieurs ressources d'infrastructures disponibles, la pluralité d'options de déploiement étant déterminée pour être conforme audit au moins un critère de déploiement ;
hiérarchiser la pluralité d'options de déploiement pour produire un ensemble ordonné d'options de déploiement, dans lequel la hiérarchie d'une option de déploiement, $rank_{option}$, est calculée comme étant

$$rank_{option} = \sum_{i=1}^{n} (w_i) \frac{u_i + v_i}{c_i}$$

où

$u_i$ correspond à une utilisation d'une ressource à l'intérieur de l'option de déploiement ;
$v_i$ correspond à une capacité de ressource demandée ;
$c_i$ correspond à une capacité totale de la ressource à l'intérieur de l'option de déploiement ;
$w_i$ correspond à un poids relatif affecté à un type de la ressource ; et
n est le nombre de ressources à l'intérieur de l'option de déploiement ;
générer une structure arborescente de données (200) ayant des niveaux (204, 206, 208) de nœuds pour représenter l'ensemble ordonné d'options de déploiement, dans

lequel chaque niveau de nœuds dans la structure arborescente de données (200) est trié en se basant sur une hiérarchisation de la pluralité d'options de déploiement, dans lequel la structure arborescente de données (200) comprend au moins un nœud parent dans un niveau de conteneur (202) associé à des éléments logiques utilisés pour former le plan de conception d'application (100), le nœud parent étant associé à au moins l'un parmi un palier Web, un palier app, et un palier base de données et ayant au moins un nœud enfant dans les niveaux (204, 206, 208) de nœuds pour représenter l'ensemble ordonné d'options de déploiement ; et
déployer le plan de déploiement comportant l'ensemble ordonné d'options de déploiement dans un environnement d'informatique en nuage ;
dans lequel le plan de conception d'application (100) comporte une composition logique d'une application, et dans lequel au moins une partie dudit au moins un critère de déploiement est basée sur :

la composition logique de l'application ; et
une disponibilité du paquet de données au niveau d'un dépôt associé à une ressource d'infrastructure disponible.

**7.** Système selon la revendication 6, dans lequel chaque nœud feuille dans la structure arborescente de données (200) représente une charge de travail associée au plan de conception d'application (100), et dans lequel chaque option de déploiement dans la pluralité d'options de déploiement correspond à un composant respectif associé au plan de conception d'application (100), et dans lequel chaque option de déploiement correspondant au composant respectif est représentée par un chemin allant d'un nœud feuille respectif à un nœud racine dans la structure arborescente de données (200).

**8.** Système selon la revendication 6, dans lequel le système est associé à une couche d'abstraction représentée entre au moins une application et une pluralité de ressources d'infrastructures, dans lequel la pluralité de ressources d'infrastructures comprend lesdites une ou plusieurs ressources d'infrastructures disponibles, et dans lequel la couche d'abstraction facilite une ou plusieurs opérations entre ladite au moins une application et la pluralité de ressources d'infrastructures.

**9.** Support de stockage non transitoire lisible par ordinateur comprenant des instructions qui, quand elles sont exécutées par au moins un processeur d'un système informatique (300), amènent le système informatique (300) à effectuer le procédé selon l'une quelconque des revendications 1, 2 ou 4.

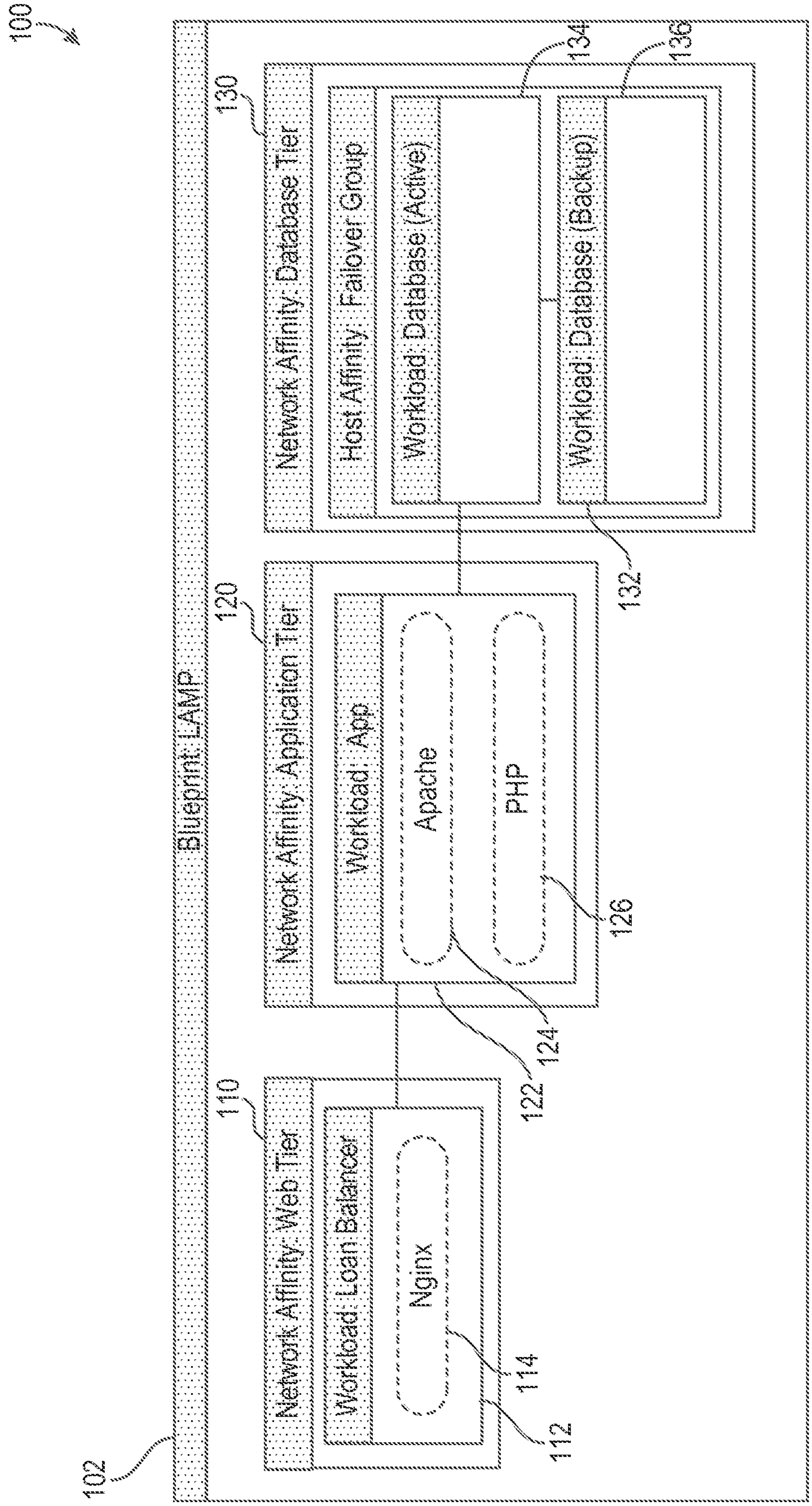
100
102
Blueprint: LAMP
110
Network Affinity: Web Tier
Workload: Loan Balancer
Nginx
112
114
120
Network Affinity: Application Tier
Workload: App
Apache
PHP
122
124
126
130
Network Affinity: Database Tier
Host Affinity: Failover Group
Workload: Database (Active)
Workload: Database (Backup)
132
134
136

FIGURE 1

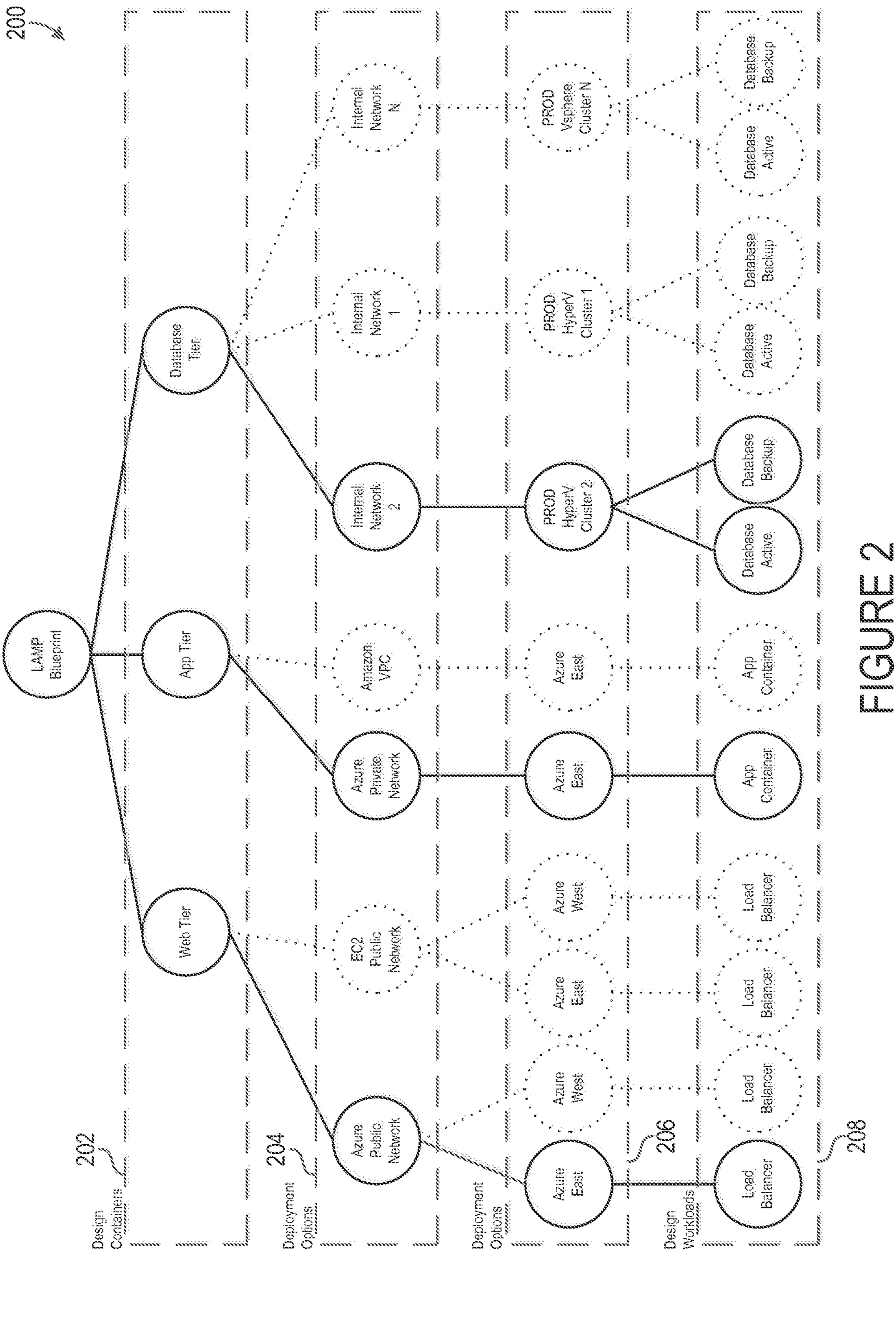
200
202
204
206
208
Design Containers
Deployment Options
Deployment Options
Design Workloads
LAMP Blueprint
Web Tier
App Tier
Database Tier
Azure Public Network
EC2 Public Network
Azure Private Network
Amazon VPC
Internal Network 2
Internal Network 1
Internal Network N
Azure East
Azure West
Azure East
Azure West
Azure East
Azure East
PROD HyperV Cluster 2
PROD HyperV Cluster 1
PROD Vsphere Cluster N
Load Balancer
Load Balancer
Load Balancer
Load Balancer
App Container
App Container
Database Active
Database Backup
Database Active
Database Backup
Database Active
Database Backup

FIGURE 2

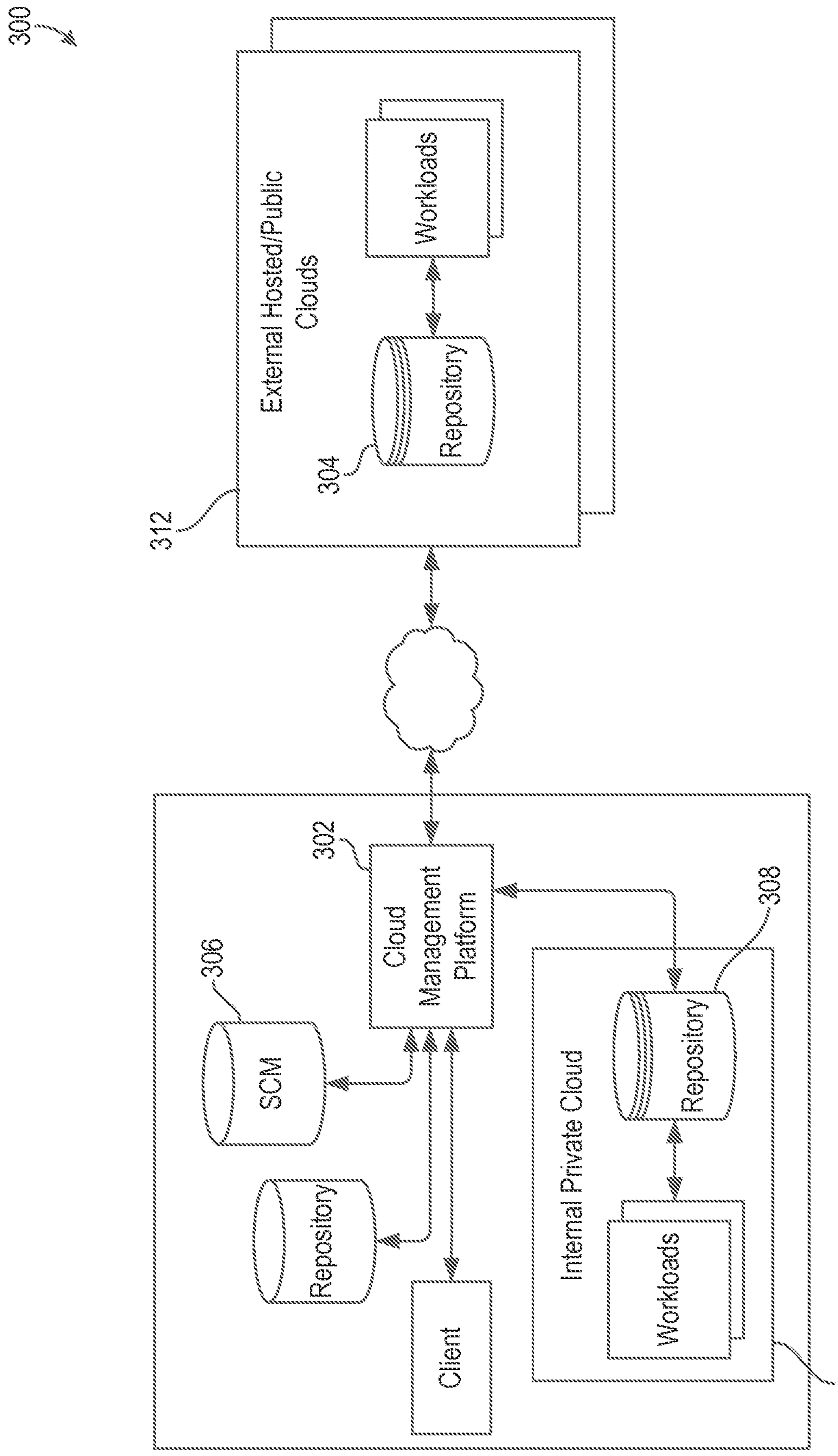
300
312
External Hosted/Public Clouds
304
Repository
Workloads
302
Cloud Management Platform
306
SCM
Repository
Client
308
Repository
Internal Private Cloud
Workloads
310

FIGURE 3

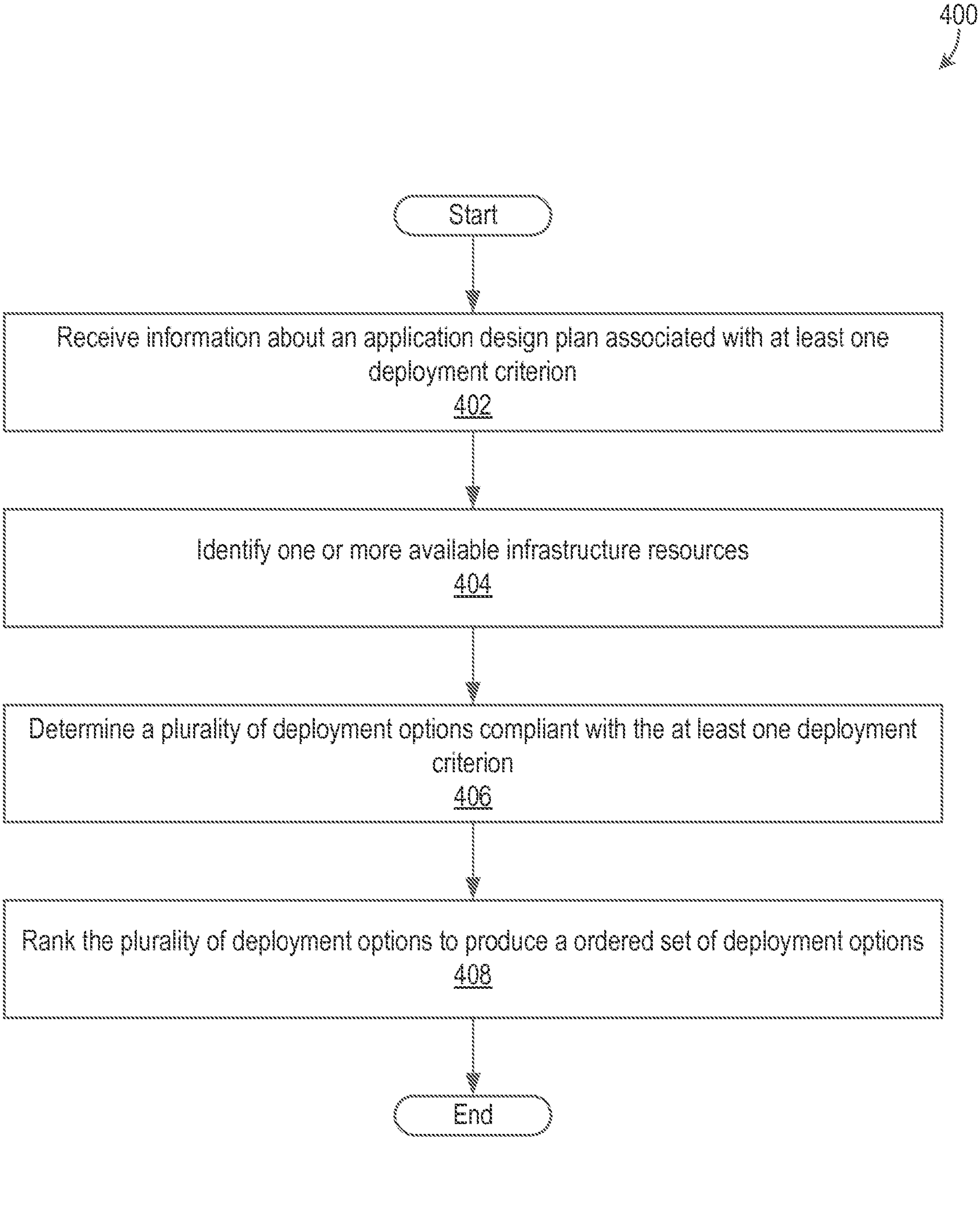
400
Start
Receive information about an application design plan associated with at least one deployment criterion
402
Identify one or more available infrastructure resources
404
Determine a plurality of deployment options compliant with the at least one deployment criterion
406
Rank the plurality of deployment options to produce a ordered set of deployment options
408
End

FIGURE 4A

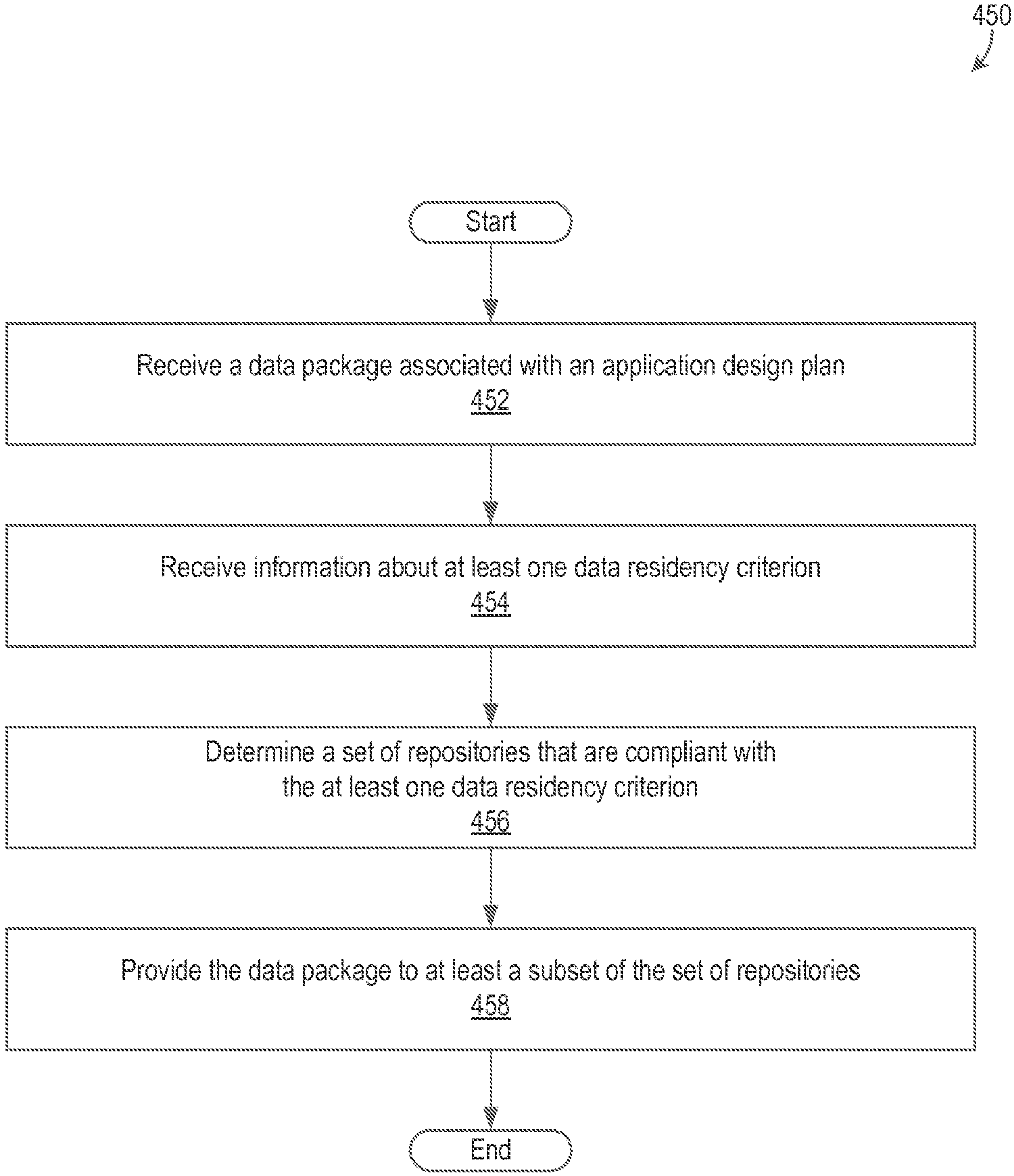
450
Start
Receive a data package associated with an application design plan
452
Receive information about at least one data residency criterion
454
Determine a set of repositories that are compliant with
the at least one data residency criterion
456
Provide the data package to at least a subset of the set of repositories
458
End

FIGURE 4B

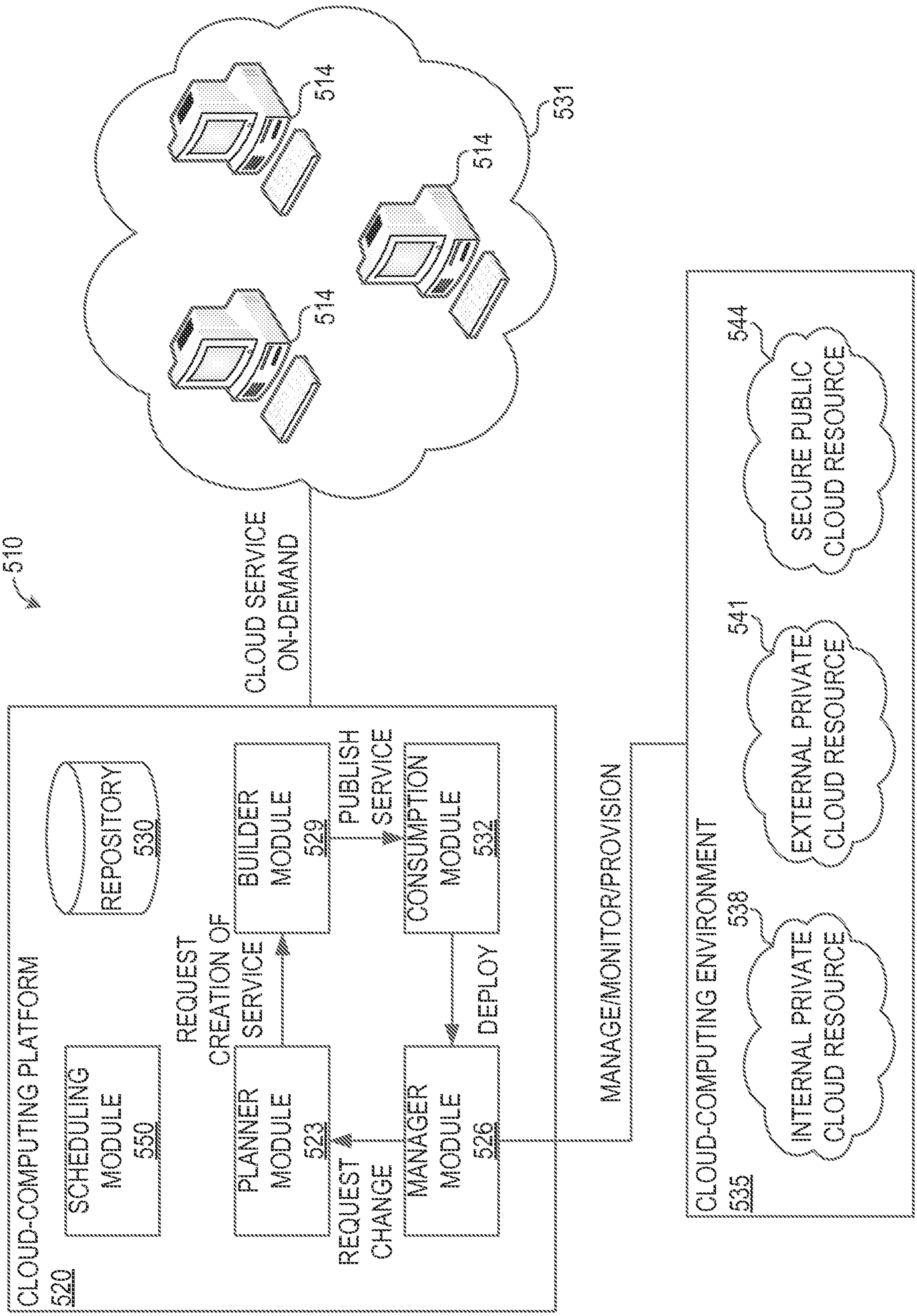

510
CLOUD-COMPUTING PLATFORM
520
SCHEDULING MODULE
550
REPOSITORY
530
PLANNER MODULE
523
REQUEST CREATION OF SERVICE
BUILDER MODULE
529
PUBLISH SERVICE
CONSUMPTION MODULE
532
DEPLOY
MANAGER MODULE
526
REQUEST CHANGE
CLOUD SERVICE ON-DEMAND
514
514
514
531
MANAGE/MONITOR/PROVISION
CLOUD-COMPUTING ENVIRONMENT
535
538
INTERNAL PRIVATE CLOUD RESOURCE
541
EXTERNAL PRIVATE CLOUD RESOURCE
544
SECURE PUBLIC CLOUD RESOURCE


FIGURE 5

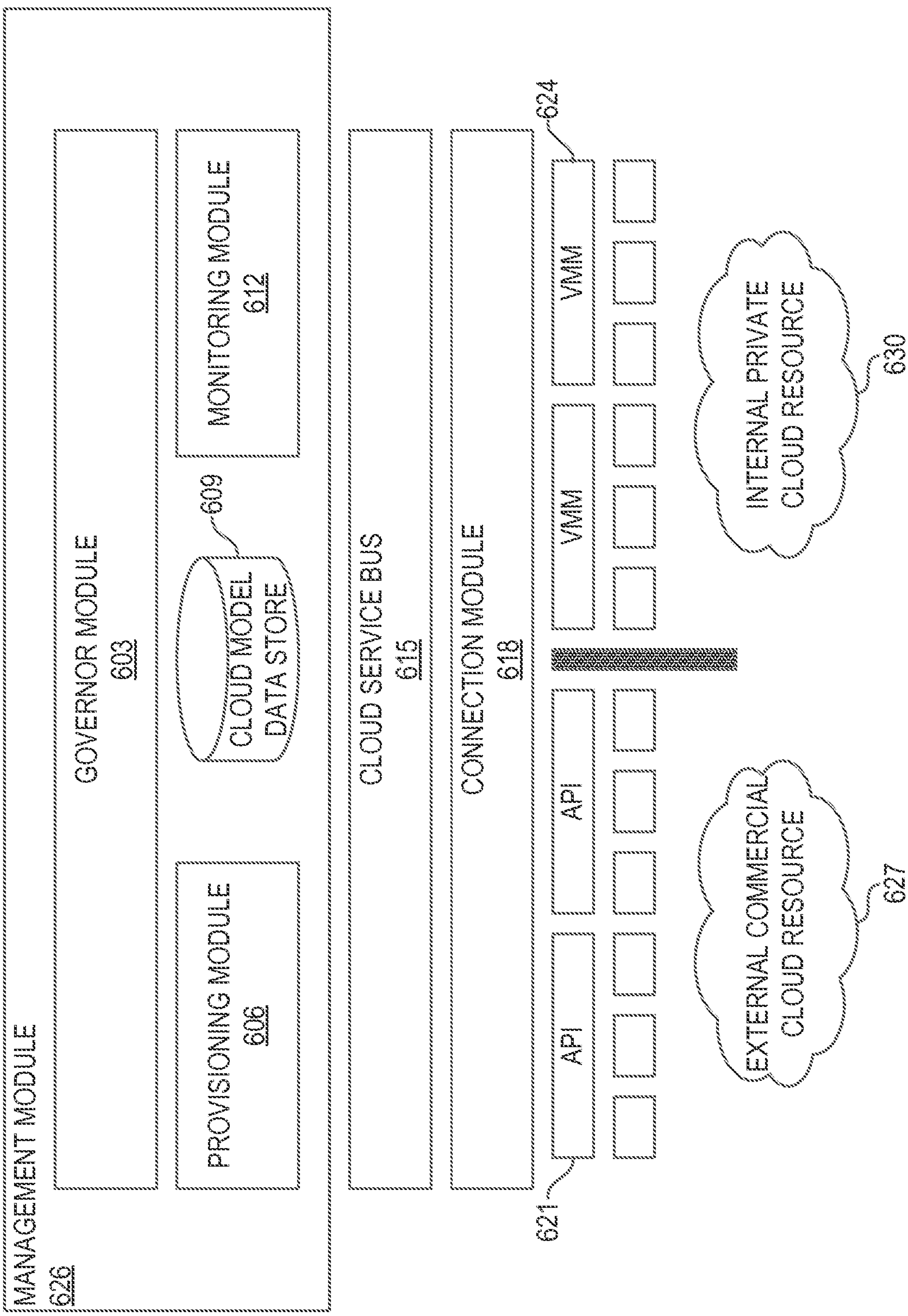
MANAGEMENT MODULE
626
GOVERNOR MODULE
603
PROVISIONING MODULE
606
CLOUD MODEL DATA STORE
609
MONITORING MODULE
612
CLOUD SERVICE BUS
615
CONNECTION MODULE
618
621
API
API
VMM
VMM
624
EXTERNAL COMMERCIAL CLOUD RESOURCE
627
INTERNAL PRIVATE CLOUD RESOURCE
630

FIGURE 6

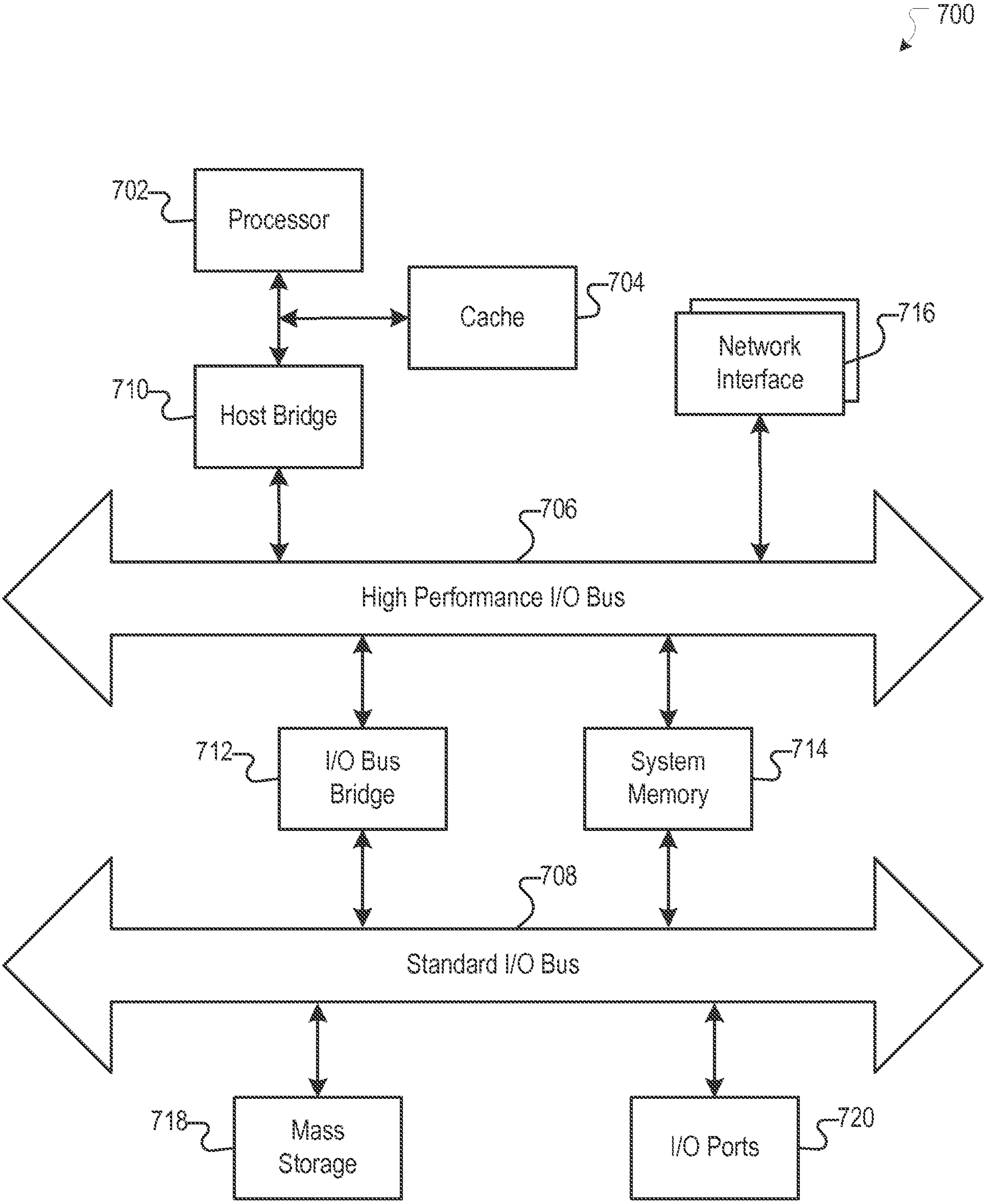
700
702
Processor
Cache
704
Network
Interface
716
710
Host Bridge
706
High Performance I/O Bus
712
I/O Bus
Bridge
System
Memory
714
708
Standard I/O Bus
718
Mass
Storage
I/O Ports
720

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008306798 A1